(19) Europäisches Patentamt
European Patent Office
Office européen des brevets

(11) EP 2 857 137 A1

(12) # EUROPEAN PATENT APPLICATION
published in accordance with Art. 153(4) EPC

(43) Date of publication:
**08.04.2015 Bulletin 2015/15**

(21) Application number: **13794456.7**

(22) Date of filing: **24.05.2013**

(51) Int Cl.:
***B23K 11/11*** *(2006.01)* ***B23K 11/30*** *(2006.01)*

(86) International application number:
**PCT/KR2013/004548**

(87) International publication number:
**WO 2013/176509 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.05.2012 KR 20120056153**
**28.09.2012 KR 20120108603**

(71) Applicant: **Korea Institute of Industrial Technology
Cheonan-si, Chungcheongnam-do 331-825 (KR)**

(72) Inventors:
- **KANG, Mun Jin
Incheon 406-082 (KR)**
- **KIM, Dong Cheol
Incheon 406-840 (KR)**
- **KIM, Cheol Hee
Incheon 406-840 (KR)**
- **KIM, Shae Kwang
Seoul 156-792 (KR)**
- **YOO, Hoi Soo
Incheon 406-110 (KR)**
- **YUN, Hyun Jun
Goyang-si
Gyeonggi-do 410-315 (KR)**

(74) Representative: **Mounteney, Simon James
Marks & Clerk LLP
90 Long Acre
London
WC2E 9RA (GB)**

(54) **ELECTRODE FOR RESISTANCE SPOT WELDING AND A METHOD FOR RESISTANCE SPOT WELDING USING THE SAME**

(57) Provided are a resistance spot welding electrode including a projection protruding from an opposing surface that faces a base metal, surrounding a center of the opposing surface, and including a round-shaped end that is capable of contacting the base metal, in order to expand a welding area, minimize expulsion, and significantly increase weld strength, and a resistance spot welding method using the same.

FIG. 1

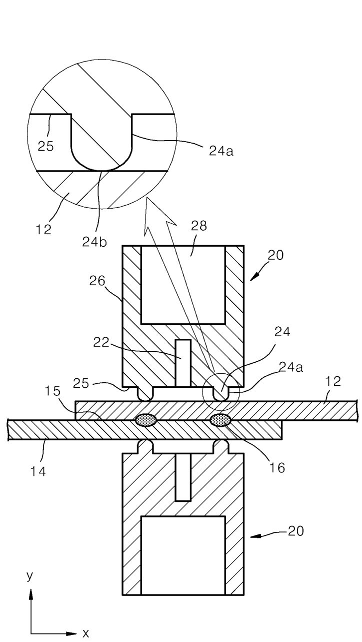


EP 2 857 137 A1

## Description

TECHNICAL FIELD

The present invention relates to a welding electrode and a welding method using the same and, more particularly, a resistance spot welding electrode and a resistance spot welding method using the same.

BACKGROUND ART

Resistance welding includes projection welding, resistance seam welding, resistance butt welding, butt seam welding, spot welding, etc. In particular, spot welding, which increases a current density due to the shape of an electrode, and projection welding, which increases a current density due to the shape of a base metal are frequently used.

DETAILED DESCRIPTION OF THE INVENTION

TECHNICAL PROBLEM

However, according to the conventional resistance spot welding, the larger a nugget is induced in the welding process, the higher the bond strength becomes. Therefore, a welding current or a welding time is increased to grow the nugget in the conventional resistance spot welding. However, if the nugget grows too large, expulsion occurs and therefore molten metal inside the nugget explodes and scatters between two metallic materials, thereby decreasing the bond strength.

The present invention has been devised to solve the aforementioned problems and provides a resistance spot welding electrode and a resistance spot welding method for expanding an electrified area, minimizing expulsion, and significantly increasing weld strength. However, the above technical problem is illustrative only and the scope of the present invention is not limited thereto.

TECHNICAL SOLUTION

According to an aspect of the present invention, there is provided a resistance spot welding electrode including a ring-shaped projection protruding from an opposing surface that faces a base metal, and surrounding a center of the opposing surface, wherein an end of the projection that is capable of contacting the base metal has a radius of curvature R, and wherein the projection satisfies conditions defined by the following Formulas 1 to 3:

[Formula 1]

$$w5/w6 \geq 1/4,$$

[Formula 2]

$$4\ \text{mm} \leq w5 < w6,$$

and

[Formula 3]

$$2\ \text{mm} \leq (w6-w5)/2 \leq 4\ \text{mm},$$

wherein w5 denotes an inner diameter of the projection relative to the center of the opposing surface, and w6 denotes an outer diameter of the projection relative to the center of the opposing surface.

The end of the projection may further satisfy a condition defined by the following Formula 4:

[Formula 4]

$$(w6-w5)/4 < R \leq (w6-w5)/2.$$

The the outer diameter of the projection may be smaller than an outer diameter of the opposing surface.

The outer diameter of the projection may be equal to an outer diameter of the opposing surface.

A recess may be provided in the center of the opposing surface in a direction away from the base metal. The inner diameter of the projection may be greater than a diameter of the recess, and the outer diameter of the projection may be smaller than or equal to an outer diameter of the opposing surface. The inner diameter of the projection may be equal to a diameter of the recess, and the outer diameter of the projection may be smaller than an outer diameter of the opposing surface.

A pressure may be applied through the projection to the base metal and electrification is performed so that a nugget is generated on the base metal that corresponds to the projection.

According to another aspect of the present invention, there is provided a resistance spot welding method including providing a first resistance spot welding electrode on a surface of a first base metal, the first resistance spot welding electrode comprising a projection that protruding from an opposing surface that faces the first base metal, surrounding a center of the opposing surface, comprising an end that is capable of contacting the first base metal and having a radius of curvature radius R, and satisfying conditions defined by the following Formulas 1 to 3:

[Formula 1]

$$w5/w6 \geq 1/4,$$

[Formula 2]

$$4\ mm \leq w5 < w6,$$

and

[Formula 3]

$$2\ mm \leq (w6-w5)/2 \leq 4\ mm,$$

providing a second resistance spot welding electrode on a surface of a second base metal, the second resistance spot welding electrode comprising a projection that protruding from an opposing surface that faces the second base metal, surrounding a center of the opposing surface, comprising an end that is capable of contacting the second base metal and having a radius of curvature radius R, and satisfying conditions defined by the following Formulas 1 to 3:

[Formula 1]

$$w5/w6 \geq 1/4,$$

[Formula 2]

$$4\ mm \leq w5 < w6,$$

and

[Formula 3]

$$2\ mm \leq (w6-w5)/2 \leq 4\ mm,$$

and
forming a nugget in the base metals using the first and second resistance spot welding electrodes,
wherein w5 denotes an inner diameter of the projection relative to the center of the opposing surface, and w6 denotes an outer diameter of the projection relative to the center of the opposing surface.

The end of the projection may further satisfy a condition defined by Formula 4:

[Formula 4]

$$(w6-w5)/4 < R \leq (w6-w5)/2.$$

The providing of the first resistance spot welding electrode on the surface of the first base metal and the providing of the second resistance spot welding electrode on the surface of the second base metal may comprise: providing the projection disposed on a surface of the first base metal and the projection disposed on a surface of the second base metal in a symmetrical manner relative to the first and second base metals.

The forming of the nugget in the base metals may comprise: applying a pressure through the projections to the base metals and electrifying the base metals so that the nugget is generated on the base metals that correspond to the projections.

According to another aspect of the present invention, there is provided a resistance spot welding method including providing a first resistance spot welding electrode on a surface of a first base metal, the first resistance spot welding electrode comprising a projection protruding from an opposing surface that faces the first base metal, surrounding a center of the opposing surface, comprising an end that is capable of contacting the first base metal and having a radius of curvature radius R, and satisfying conditions defined by the following Formulas 1 to 3:

[Formula 1]

$$w5/w6 \geq 1/4,$$

[Formula 2]

$$4 \text{ mm} \leq w5 < w6,$$

and

[Formula 3]

$$2 \text{ mm} \leq (w6-w5)/2 \leq 4 \text{ mm};$$

providing a second resistance spot welding electrode on a surface of a second base metal, the second resistance spot welding electrode having a flat surface that faces and directly contacts the second base metal; and
forming a nugget in the base metals using the first and second resistance spot welding electrodes,
wherein w5 denotes an inner diameter of the projection relative to the center of the opposing surface, and w6 denotes an outer diameter of the projection relative to the center of the opposing surface.

The end of the projection further satisfies a condition defined by the following Formula 4:

[Formula 4]

$$(w6-w5)/4 < R \leq (w6-w5)/2.$$

The forming of the nugget in the base metals may comprise: applying a pressure through the projections to the base metals and electrifying the base metals so that the nugget is generated on the base metals that correspond to the projections.

ADVANTAGEOUS EFFECTS

According to embodiments of the present invention, a resistance spot welding electrode and a resistance spot welding method for expanding a welding area, minimizing expulsion, and significantly increasing weld strength may be provided.

DESCRIPTION OF THE DRAWINGS

FIG. 1 is a cross section illustrating a resistance spot welding method according to an embodiment of the present invention.
FIG. 2 is a partial cut-away perspective view of a nugget generated at an interface of base metal plates.
FIG. 3 is a cross-sectional view for describing a resistance spot welding method according to another embodiment of the present invention.
FIG. 4 is a cross section of a resistance spot welding electrode according to an embodiment of the present invention.
FIG. 5 is a cross section taken along line Q-Q of FIG. 4.
FIG. 6 is a partial cut-away perspective view of a resistance spot welding electrode of FIG. 4.
FIG. 7 is a cross section of a resistance spot welding electrode according to another embodiment of the present invention.
FIG. 8 is a cross section taken along line Q-Q of FIG. 7.
FIG. 9 is a partial cut-away perspective view of a resistance spot welding electrode of FIG. 7.
FIG. 10 is a cross section of a resistance spot welding electrode according to yet another embodiment of the present invention.
FIG. 11 is a cross section taken along line Q-Q of FIG. 10.
FIG. 12 is a partial cut-away perspective view of the resistance spot welding electrode of FIG. 10.
FIG. 13 schematically shows the tensile strengths of the welds where the resistance spot welding methods and electrodes shown in Table 1 have been applied.
FIGS. 14A and 14B schematically show surface images of the welds where the resistance spot welding methods and electrodes shown in Table 1 have been applied.
FIGS. 15A and 15B schematically show the results of peel tests of the welds where the resistance spot welding methods and electrodes shown in Table 1 have been applied.
FIGS. 16A and 16B schematically show the cross sections of the welds where the resistance spot welding methods and electrodes shown in Table 1 have been applied.
FIGS. 17A and 17B schematically show the tensile strength of welds and the size of nuggets when a flat portion of a dome-shaped electrode has diameters of 6 mm and 8 mm, according to a comparative example to be compared with the experimental examples of the present invention.
FIG. 18 is a graph schematically showing the tensile strengths of the welds measured based on continuous welding using a resistance spot welding method and electrode according to an embodiment of the present invention.
FIG. 19A schematically shows the conditions and results of a tensile-shear testing performed after a resistance spot welding is carried out using a dome-shaped electrode.
FIG. 19B schematically shows the cross-sectional images of the welds where the tensile-shear testing is performed after the resistance spot welding is carried out using the dome-shaped electrode.
FIG. 20 schematically shows the tensile shear strengths, indentations, cross-sectional images and results of peel test of welds where a resistance spot welding method and electrode according to an embodiment of the present invention.
FIG. 21 is a cross section of a resistance spot welding electrode including a projection that has a flat end.
FIG. 22A schematically shows the surface images of the welds in relation to the number of welds in an electrode lifetime testing using the resistance spot welding electrode of FIG. 21.
FIG. 22B schematically shows the surface images of the welds in relation to the number of welds in an electrode lifetime testing using the resistance spot welding electrode of FIG. 21.
FIG. 22C is a graph schematically showing the tensile strengths of the welds in relation to the number of welds in the electrode lifetime test using the resistance spot welding electrode of FIG. 21.
FIG. 22D schematically shows the results of peel test based on the number of welds in the electrode lifetime test using the resistance spot welding electrode of FIG. 21.
FIG. 23 schematically shows the tensile strengths of the welds where the resistance spot welding methods and electrodes according to Experiments 11 to 22 of Table 2 have been applied.
FIGS. 24A and 24B schematically show the surface images of the welds where the resistance spot welding methods and electrodes according to Experiments 11 to 22 of Table 2 have been applied.
FIGS. 25A and 25B schematically show results of peel test of welds achieved using the resistance spot welding methods and electrodes according to Experiments 11 to 22 of Table 2.
FIG. 26 is schematically shows tensile strengths of welds measured using the resistance spot welding methods and electrodes according to Experiments 23 to 26 of Table 2.
FIG. 27A schematically shows surface images of welds achieved using the resistance spot welding methods and electrodes according to Experiments 23 to 26 of Table 2.
FIG. 27B schematically shows results of peel test of welds achieved using the resistance spot welding methods and electrodes according to Experiments 23 to 26 of Table 2.

MODE OF THE INVENTION

Hereinafter, the present invention will be described in detail by explaining embodiments of the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the thicknesses of layers and regions are exaggerated for clarity.
Spatially relative terms, such as "above", "upper", "beneath", "below", "lower", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "above" may encompass both an orientation of above and below.
It will be understood that when an element, such as a layer, a region, or a substrate, is referred to as being "on" or "(electrically) connected to" another element, it may be directly on or (electrically) connected to the other element or intervening elements may be present. In contrast, when an element is referred to as being "directly on", "directly (electrically) connected to" or "in direct contact with" another element or layer, there are no intervening elements or layers present.
In the following description, x, y, and z axes are not limited to three axes on an orthogonal coordinate system, and may be interpreted in a broader sense. For example, the x, y, and z axes may be orthogonal or non-orthogonal to each other.
FIG. 1 is a cross section for illustrating a resistance spot welding method according to an embodiment of the present invention, and FIG. 2 is a partial cut-away perspective view of a nugget generated at an interface of base metal plates.
Referring to FIGS. 1 and 2, in the resistance spot welding method according to the embodiment of the present invention, a pair of resistance spot welding electrodes 20 and 20 is symmetrically positioned on the top surface of the base metal plate 12 and on the bottom surface of the base metal plate 14. Resistance spot welding is a welding method wherein the electrically conductive base metal plates 12 and 14 are positioned in an overlapping arrangement between the upper and lower electrodes 20 and 20 and a certain amount of pressure and a voltage is applied to the electrodes 20 and 20 for a certain period of time to electrify the base metal plates 12 and 14. Since the interface 15 of the two base metal plates 12 and 14 in the current path has a relatively high electrical resistance, a nugget 16, which is a region created by melting and mixing due to resistance heating, is generated at the interface 15 of the base metal plates 12 and 14 under an appropriate condition.
In resistance spot welding, it is known that the size of the nugget 16 is proportional to bond strength. Increasing the electrified area is the most effective way to expand the nugget 16. If the electrified area is increased, current density is lowered and thus melting does not occur at a previous welding current. Accordingly, to grow the nugget 16 by expanding the electrified area, the welding current should be increased in proportion to the expanded electrified area. However, when the nugget 16 gets larger, the bond strength may decrease since pressure is applied to the enlarged molten material and expulsion, i.e., explosion of the molten material that occurs due to an electromagnetic force which is proportional to the square of the current, takes place. Furthermore, a molten zone is created at only one place, thereby causing an easy explosion when an external force such as an electromagnetic force or a pressure is applied, and the explosion may cause a considerable amount of the molten material of the nugget 16 to scatter between the base metal plates 12 and 14, thereby creating a large hole in part of of the nugget 16.
Accordingly, the most important control technology of resistance spot welding is to increase the size of the nugget 16 and to suppress expulsion. In the embodiment of the present invention, the resistance spot welding electrodes 20 for expanding the electrified area, minimizing expulsion, and significantly increasing the strength of welds are provided.
Each of the resistance spot welding electrodes 20 and 20 includes a projection 24 that protrudes from a surface 25 facing the base metal plate 12 (or 14). The opposing surface 25 corresponds to a bottom surface of the resistance spot welding electrode 20, while being spaced apart from the base metal plate 12 (or 14) by a certain distance without directly contacting the base metal plate 12 (or 14).

The projection 24 that protrudes from the opposing surface 25 may have a structure surrounding at least part of the opposing surface 25, e.g., the center of the opposing surface 25. For example, the projection 24 may include a ring-shaped projection that surrounds the center of the opposing surface 25. However, the projection 24 according to the technical idea of the present invention is not limited to the ring-shaped projection but may have an arbitrary shape, e.g., an oval, polygonal or irregular projection that surrounds the center of the opposing surface 25. Meanwhile, the projection 24 may continuously or discontinuously surround the center of the opposing surface 25.

The projection 24 may include a first portion 24a that protrudes and extends from the opposing surface 25, and a second portion 24b that directly contacts the base metal plate 12 (or 14). The first portion 24a of the projection 24 is directly connected to the opposing surface 25. Meanwhile, the second portion 24b of the projection 24 is positioned between the first portion 24a and the base metal plate 12 (or 14), is capable of contacting the base metal plate 12 (or 14), and corresponds to the end of the projection 24. Here, the second portion 24b that corresponds to the end of the projection 24 does not have a flat end but a rounded end. In other embodiments, the projection 24 may comprise the rounded second portion 24b without the first portion 24a.

A pressure is applied through the projection 24 to the base metal plates 12 and 14 and electrification is performed. The nugget 16 that is generated at the interface 15 of the base metal plates 12 and 14 may be located to correspond to the projections 24 that is symmetrically positioned on the top surface of the base metal plate 14 and bottom surface of the base metal plate 14. The projection 24 may include a protrusion that is spaced apart from the center of the opposing surface 25.

The resistance spot welding electrode 20 may have a recess 22 formed in the opposing surface 25 in a direction away from the base metal plate 12 (or 14). The recess 22 may be formed at a particular location of the opposing surface 25 of the projection 24, i.e., the center of the opposing surface 25, to extend away from the base metal plates 14 and 20 within a body 26 of the resistance spot welding electrode 20. The recess 22 may facilitate a dressing process to be performed when part of the resistance spot welding electrode 20, which contacts or is adjacent to the base metal plate 12 or 14, is contaminated.

In general, when resistance spot welding is repeatedly performed, high heat is generated and a contamination coating can be formed on the opposing surface 25 of the resistance spot welding electrode 20 and the surface of the projection 24. A dressing process includes a process of abrading and removing the contamination coating. A dressing device (not shown) for performing the dressing process may accommodate the opposing surface 25 of the resistance spot welding electrode 20 and the projection 24 in a container of the dressing device and rotate at high speed to abrade and remove the contamination coating on the opposing surface 25 of the resistance spot welding electrode 20 and the projection 24.

However, the contamination coating formed inside the projection 24, for example, at the center of the opposing surface 25, may not be easily abraded and removed due to the projection 24. This is because, due to the projection 24 that protrudes from the opposing surface 25, an abrader of the dressing device cannot easily contact the center of the opposing surface 25. Considering this, if the recess 22 is formed in the body 26 of the resistance spot welding electrode 20 to extend from the center of the opposing surface 25 in a direction away from the base metal plate 12 or 14, the contamination coating does not need to be removed from at least a part where the recess 22 is formed, thereby relatively facilitating the dressing process.

Meanwhile, the resistance spot welding electrode 20 may further include a certain device part 28 that is configured to apply pressure and supply a current to the base metal plate 12 (or 14).

FIG. 3 is a cross section for illustrating a resistance spot welding method according to another embodiment of the present invention.

Referring to FIG. 3, in the resistance spot welding method according to the embodiment of the present invention, a first resistance spot welding electrode 20 is positioned on a base metal plate 12 and a second resistance spot welding electrode 30 is positioned on a base metal plate 14. The first resistance spot welding electrode 20 is identical to the resistance spot welding electrode 20 described above with reference to FIG. 1. The second resistance spot welding electrode 30 may include an opposing surface 35 that directly contacts the base metal plate 14 and has a substantially flat structure without a projection. That is, unlike the first resistance spot welding electrode 20, the second resistance spot welding electrode 30 does not have a projection. A device part 38 and a recess 32 of the second resistance spot welding electrode 30 are identical to the device part 28 and the recess 22 of the first resistance spot welding electrode 20, and thus repeated descriptions thereof will be omitted herein.

In a resistance spot welding method according to modified embodiments of the present invention, only a resistance spot welding electrode that contacts the top surface of the base metal plate 14 or bottom surface of the base metal plates 12 may provide a projection having a rounded end. The inventors discovered that this resistance spot welding method was utilized to expand the electrified area, to minimize expulsion, and to significantly improve bond strength of weldwelds.

Hereinafter, a description of the configurations of resistance spot welding electrodes according to various embodiments of the present invention, and experimental examples thereof will be provided. However, the following experimental examples are provided only for better understanding of the present invention, and the present invention is not limited thereto.

FIG. 4 is a cross section of a resistance spot welding electrode according to an embodiment of the present invention, FIG. 5 is a cross section taken along line Q-Q of FIG. 4, and FIG. 6 is a partial cut-away perspective view of the resistance spot welding electrode of FIG. 4.

Referring to FIGS. 4 to 6, a recess 22 having a diameter of a first length w1 is formed in the center of an opposing surface 25 of the resistance spot welding electrode 20. A projection 24 having a height of a fourth length w4 and a cross-sectional width of a third length w3 is provided on the opposing surface 25. The projection 24 has an inner diameter of the first length w1 and an outer diameter of a sixth length w6. A first portion 24a of the projection 24 is directly connected to the opposing surface 25. The width of a cross section, which is parallel to the z-x plane, of the first portion 24a of the projection 24 corresponds to the third length w3. A second portion 24b of the projection 24 is positioned between the first portion 24a and a base metal plate, corresponds to an end of the projection 24, and has a rounded shape. A total outer diameter of the resistance spot welding electrode 20 is an eighth length w8. The difference between the eighth length w8 and the sixth length w6 is twice as large as a seventh length w7. The outer diameter w6 of the projection 24 may be smaller than the diameter w8 of the opposing surface 25.

In the resistance spot welding electrode 20 according to the embodiment shown in FIGS. 4 to 6, a side surface of the recess 22 is formed on the same surface as a side surface of the projection 24 such that the inner diameter of the projection 24 is equal to the diameter of the recess 22 (i.e., the first length w1).

FIG. 7 is a cross section of a resistance spot welding electrode according to another embodiment of the present invention, FIG. 8 is a cross section taken along line Q-Q of FIG. 7, and FIG. 9 is a partial cut-away perspective view of the resistance spot welding electrode of FIG. 7.

Referring to FIGS. 7 to 9, a recess 22 having a diameter of a first length w1 is formed in the center of an opposing surface 25 of the resistance spot welding electrode 20. A projection 24 is positioned apart from a side surface of the recess 22 by a second length w2. The projection 24 having a height of a fourth length w4 and a cross-sectional width of a third length w3 is provided on the opposing surface 25. The projection 24 has an inner diameter of a fifth length w5 and an outer diameter of a sixth length w6. A first portion 24a of the projection 24 is directly connected to the opposing surface 25. The width of a cross section, which is parallel to the z-x plane, of the first portion 24a of the projection 24 corresponds to the third length w3. A second portion 24b of the projection 24 is positioned between the first portion 24a and a base metal plate, corresponds to an end of the projection 24, and has a rounded shape. The second portion 24b of the projection 24 has a constant radius of curvature R. This radius of curvature R of the second portion 24b of the projection 24 may also be applied to FIGS. 4 and 10. A total outer diameter of the resistance spot welding electrode 20 is an eighth length w8. The difference between the eighth length w8 and the sixth length w6 is twice as large as a seventh length w7.

In the resistance spot welding electrode 20 according to the embodiment shown in FIGS. 7 to 9, the projection 24 is configured in such a manner that the fifth length w5, which is the inner diameter of the projection 24, is greater than the first length w1, which is the diameter of the recess 22, and the sixth length w6, which is the outer diameter of the projection 24, is smaller than the eighth length w8, which is the total outer diameter of the resistance spot welding electrode 20.

FIG. 10 is a cross section of a resistance spot welding electrode according to yet another embodiment of the present invention, FIG. 11 is a cross section taken along line Q-Q of FIG. 10, and FIG. 12 is a partial cut-away perspective view of the resistance spot welding electrode of FIG. 10.

Referring to FIGS. 10 to 12, a recess 22 having a diameter of a first length w1 is formed in the center of an opposing surface 25 of the resistance spot welding electrode 20. A projection 24 is positioned apart from a side surface of the recess 22 by a second length w2. The projection 24 having a height of a fourth length w4 and a cross-sectional width of a third length w3 is provided on the opposing surface 25. The projection 24 has an inner diameter of a fifth length w5 and an outer diameter of a sixth length w6. A first portion 24a of the projection 24 is directly connected to the opposing surface 25. The width of a cross section, which is parallel to the z-x plane, of the first portion 24a of the projection 24 corresponds to the third length w3. A second portion 24b of the projection 24 is positioned between the first portion 24a and a base metal plate, corresponds to an end of the projection 24, and has a rounded shape.

In the resistance spot welding electrode 20 according to the embodiment shown in FIGS. 10 to 12, the projection 24 is configured in such a manner that the fifth length w5, which is the inner diameter of the projection 24, is greater than the first length w1, which is the diameter of the recess 22, and the sixth length w6, which is the outer diameter of the projection 24, is equal to the total outer diameter of the resistance spot welding electrode 20.

Table 1 illustrates experimental examples of resistance spot welding electrodes and resistance spot welding methods according to various embodiments of the present invention. The resistance spot welding methods use at least one first resistance spot welding electrode 20 that is indicated as a rounded electrode in Table 1 for convenience of explanation. Table 1 also indicates the first length w1 to eighth length w8 corresponding to the sizes of the elements of the first resistance spot welding electrode 20. In Table 1, the unit of measurement is millimeter (mm).

[Table 1]

| Experiment no. | w1 | w2 | w3 | w4 | w5 | w6 | w7 | w8 | Rounded electrode Configuration | Welding Method |
|---|---|---|---|---|---|---|---|---|---|---|
| 1 | 2 | - | 2 | 2 | - | 6 | 5 | 16 | FIGS. 4 to 6 | FIG. 1 |
| 2 | 2 | 0.5 | 2 | 2 | 3 | 7 | 4.5 | 16 | FIGS. 7 to 9 | FIG. 1 |
| 3 | 2 | 1 | 2 | 2 | 4 | 8 | 4 | 16 | FIGS. 7 to 9 | FIG. 1 |
| 4 | 2 | 2 | 2 | 2 | 5 | 10 | 3 | 16 | FIGS. 7 to 9 | FIG. 1 |
| 4_1 | 2 | 2 | 2 | 2 | 5 | 10 | 3 | 16 | FIGS. 7 to 9 | FIG. 3 |
| 5 | 2 | 3 | 2 | 2 | 8 | 12 | 2 | 16 | FIGS. 7 to 9 | FIG. 1 |
| 5_1 | 2 | 3 | 2 | 2 | 8 | 12 | 2 | 16 | FIGS. 7 to 9 | FIG. 3 |
| 6 | 2 | 4 | 2 | 2 | 10 | 14 | 1 | 16 | FIGS. 7 to 9 | FIG. 1 |
| 6_1 | 2 | 4 | 2 | 2 | 10 | 14 | 1 | 16 | FIGS. 7 to 9 | FIG. 3 |
| 7 | 2 | 5 | 2 | 2 | 12 | 16 | - | 16 | FIGS. 10 to 12 | FIG. 1 |
| 7_1 | 2 | 5 | 2 | 2 | 12 | 16 | - | 16 | FIGS. 10 to 12 | FIG. 3 |
| 8 | 2 | 3 | 3 | 2.5 | 8 | 14 | 1 | 16 | FIGS. 7 to 9 | FIG. 1 |
| 8_1 | 2 | 3 | 3 | 2.5 | 8 | 14 | 1 | 16 | FIGS. 7 to 9 | FIG. 3 |
| 9 | 2 | 2 | 3 | 2.5 | 6 | 12 | 2 | 16 | FIGS. 7 to 9 | FIG. 1 |
| 9_1 | 2 | 2 | 3 | 2.5 | 6 | 12 | 2 | 16 | FIGS. 7 to 9 | FIG. 3 |
| 10 | 2 | 1 | 3 | 2.5 | 4 | 10 | 3 | 16 | FIGS. 7 to 9 | FIG. 1 |
| 10_1 | 2 | 1 | 3 | 2.5 | 4 | 10 | 3 | 16 | FIGS. 7 to 9 | FIG. 3 |

FIG. 13 schematically shows the tensile strengths of the welds where the resistance spot welding methods and electrodes shown in Table 1 have been applied, and FIGS. 14A and 14B schematically show the surface images of the welds wherein the resistance spot welding methods and electrodes shown in Table 1 have been applied. Furthermore, FIGS. 15A and 15B schematically show the results of peel tests of the welds where the resistance spot welding methods and electrodes shown in Table 1 have been applied, and FIGS. 16A and 16B schematically show the cross sections of the welds where the resistance spot welding methods and electrodes shown in Table 1 have been applied.

Meanwhile, FIGS. 17A and 17B schematically show the tensile strengths of the welds and the size of the nuggets when a flat portion of a dome-shaped electrode has diameters of 6mm and 8mm, according to a comparative example to be compared with the experimental examples of the present invention.

In the experimental examples of the present invention and the comparative example that are described with reference to FIGS. 13 to 17B, 1.2 mm-thick 1180 MPa ultra-high strength galvanized (GA) steel sheets were used as base metal plates, and the minimum tensile shear strength of these steel sheets is 9.7 kN. A pressure of 300 Kgf was applied and a 21-cycle weld time was applied.

First, referring to FIG. 17A, when the diameter of the flat portion was 6 mm, an appropriate welding current ranged from 6 kA to 7 kA and the tensile shear strength of the weld ranged from 10.2 kN to 12.7 kN (required standard strength: 10.7 kN). Expulsion occurred when the welding current reached 8 kA. Meanwhile, referring to FIG. 17B, when the diameter of the flat portion was 8 mm, as a contact area increased, the appropriate welding current increased to a range of 7 kA to 8 kA. Furthermore, as the size of the nugget increased, the tensile shear strength also increased to about 14 kN. However, since the growth of the nugget is closely related to expulsion, expulsion occurs when the welding current reaches 9 kA. Accordingly, further growth of the nuggets causes expulsion, thereby restraining increase in strength.

Next, referring to FIGS. 14A and 14B, the ring-shaped projections of the electrodes do not completely contact the base metal plates and thus many parts were not electrified. However, according to the results of tensile shear strength test shown in FIG. 13, although contact and electrification was not complete, the strength significantly increased as the total welding area and length increased. Particularly, certain appropriate zones showed tensile shear strengths more than twice the tensile shear strength of the conventional method. Furthermore, even in a region where expulsion occurs, reduction in strength never occurs since molten metal does not accumulate in a single place and therefore the amount of scattering metal is small. Meanwhile, compared to the comparative example of FIGS. 17A and 17B, an appropriate weld zone is far broader and thus a quality deviation, which is affected by selection of optimum welding conditions, is very small.

Meanwhile, referring to FIGS. 16A and 16B, a molten part has a ring shape corresponding to the ring-shaped electrode and the cross-sectional images show that a central part does not melt and that molten nuggets are symmetrically exist on both sides of the central part. Since an increase in welding current causes a nugget to grow particularly in a direction toward the center, if the ring-shaped projection has a relatively small diameter, this may cause the central part to melt. However, the present invention is technically characterized in increasing the tensile shear strength of a welded part by expanding the total area of a nugget without causing melting in the center.

FIGS. 15A and 15B show the results of peel tests to observe the fracture after welding. Referring to FIGS. 15A and 15B, button fractures occurred in almost every example. This means that fractures occurred in base metals or heat-affected zones, and almost no interfacial fracture occurred. The interfacial fracture is a separation of two test specimens at the interface thereof, which frequently occur when 1180MPa grade ultra-high strength galvanized steel sheets are welded using a conventional dome-shaped electrode.

FIG. 18 is a graph schematically showing the tensile strengths of welds measured based on continuous welding using a resistance spot welding method and electrode according to an embodiment of the present invention. A continuous resistance spot welding test was performed on 980MPa grade ultra-high strength galvanized steel sheets using the resistance spot welding method and electrode of Experiment 8 of Table 1.

Referring to FIG. 18, a conventional dome-shaped electrode of 6 mm in diameter showed strength of about 14k N until 500 welds, but the electrode according to the current embodiment showed a high strength of 17 kN to 18 kN until 380 welds. Since electrodes are dressed every 250 welds in the industrial field, the electrode showing a high strength until 380 welds is sufficient for industrial applicability.

As described above, compared with a conventional electrode, a resistance spot welding electrode including a ring-shaped projection having a certain diameter proved to help achieve significantly high weld strength of welds of steel sheets. This will be verified by another comparative example that will be described hereinafter.

FIG. 19A schematically shows the conditions and results of a tensile-shear testing performed after a resistance spot welding is carried out using a conventional dome-shaped electrode, and FIG. 19B schematically shows the cross-sectional images of welds where the tensile-shear testing is performed after the resistance spot welding is carried out using the conventional dome-shaped electrode. The base metal plates used in the above testing are 440 MPa galvanized steel sheets of 1.2 mmt in thickness.

FIG. 20 schematically shows the tensile shear strengths, indentations, cross-sectional images and results of peel test of the welds where a resistance spot welding method and electrode according to an embodiment of the present invention. The resistance spot welding test was performed on 440MPa galvanized steel sheets of 1.2 mmt in thickness using the resistance spot welding method and electrode of Experiment 9 of Table 1.

The overall tensile shear strength of the welded parts showed about 60 % increase compared with the comparative example, i.e., about 12 kN versus about 7.5kN. Furthermore, button fracture is observed and the cross sections of the welds show that the central parts are not welded but the ring-shaped projections are welded, thereby increasing the overall strength. Consequently, a resistance spot welding electrode including a ring-shaped projection having a certain diameter helps achieve remarkably high weld strength of low strength and high strength steel sheets, compared with a conventional electrode.

Meanwhile, the inventors discovered that electrode lifetime, weld tensile strength and weld bonding state of even a resistance spot welding electrode having a projection was significantly affected by the shape of an end of the projection lifetime. Compared with a projection having a flat-shaped end, a projection having a round-shaped end was advantageous in terms of electrode lifetime, weld tensile strength and weld bonding state.

FIG. 21 is a cross section of a resistance spot welding electrode including a projection that has a flat end. FIG. 22A schematically shows the surface images of the welds in relation to the number of welds in an electrode lifetime testing using the resistance spot welding electrode of FIG. 21, and FIG. 22B schematically shows the surface images of the welds in relation to the number of welds in an electrode lifetime testing using the resistance spot welding electrode of FIG. 21. Furthermore, FIG. 22C is a graph schematically showing the tensile strengths of the welds in relation to the number of welds in the electrode lifetime testing using the resistance spot welding electrode of FIG. 21, and FIG. 22D schematically shows the results of peel test in relation to the number of welds in the electrode lifetime testing using the resistance spot welding electrode of FIG. 21.

Referring to FIG. 21, the resistance spot welding electrode 21 includes a projection 24 that protrudes from an opposing surface 25 that faces base metal plates. An end 24b of the projection 24 has a flat surface to contact the base metal plate in a large area. 1180MPa ultra-high strength galvanized (GA) steel sheets of 1.2 mmt in thickness were used as the base metal plates, and the minimum tensile shear strength of the steel sheets was 9.7 kN. A welding current was 12 kA, a pressure of 300Kgf was applied and a 21-cycle weld time was applied. Seven spots spaced apart from each other by 30 mm on a continuous welding test specimen were sequentially welded, a peel test was performed after eighth weld, the size of a nugget was measured after ninth weld, and a weld tensile strength was measured after tenth weld. This process was repeated to up to 200 welds.

Referring to FIGS. 22A and 22B, the ring-shaped projection of the electrode shown in FIG. 21 does not completely contact the base metal plate and thus many parts are not electrified. Furthermore, according to the results of tensile shear strength test shown in FIG. 22C, it was problematic that the weld tensile strength did not remain constant in relation to the number of continuous welds. Eventually, it is estimated that the overall area and length of welding did not increase. It is also estimated that in a region where expulsion occurs, reduction in strength occurs since molten metal accumulates in a single place and therefore the amount of scattering metal is large. In addition, it was also problematic that the appropriate weld zone was so narrow that a quality deviation, which is affected by selection of optimum welding conditions, was very large. Referring to FIG. 22D, interfacial fracture occurred in every weld. This means that the bonding state of the resistance spot welding process leaves room for improvement. Consequently, compared with a ring-shaped projection having a flat-shaped end, a ring-shaped projection having a round shaped end remarkably increases the quality of resistance spot welding.

Table 2 illustrates other experimental examples of resistance spot welding electrodes according to various embodiments of the present invention. In the experimental examples of Table 2, the resistance spot welding electrode 20 of FIGS. 7 to 9 and the resistance spot welding method of FIG. 1 were used (however, the technical idea according to the present experimental examples is not limited to what is illustrated in FIG. 1 and is also applicable to what is illustrated in FIG. 3). In Table 2, the unit of measurement of elements of the resistance spot welding electrode 20, i.e., first to twelfth lengths w1 to w12 and a radius of curvature R of the projection 24, is millimeter (mm).

[Table 2]

| Experiment no. | w1 | w2 | w3 | w4 | w5 | w6 | w7 | w8 | w9 | w10 | w11 | w12 | R | w5/w 6 | w3/2 |
|---|---|---|---|---|---|---|---|---|---|---|---|---|---|---|---|
| 11 | 2 | 5.5 | 1 | 2.75 | 13 | 15 | 0.5 | 16 | 7 | 11.7 | 21 | 11.2 | 0.5 | 0.87 | 0.5 |
| 12 | 2 | 5.5 | 1 | 2.75 | 13 | 15 | 0.5 | 16 | 7 | 11.7 | 21 | 11.2 | 2 | 0.87 | 0.5 |
| 13 | 2 | 5 | 1.5 | 2.75 | 12 | 15 | 0.5 | 16 | 7 | 11.7 | 21 | 11.2 | 0.75 | 0.80 | 0.75 |
| 14 | 2 | 5 | 1.5 | 2.75 | 12 | 15 | 0.5 | 16 | 7 | 11.7 | 21 | 11.2 | 2 | 0.80 | 0.75 |
| 15 | 2 | 3 | 3 | 2.5 | 8 | 14 | 1 | 16 | 7 | 11.7 | 21 | 11.2 | 2 | 0.57 | 1.5 |
| 16 | 2 | 3 | 3.5 | 2.75 | 8 | 15 | 0.5 | 16 | 7 | 11.7 | 21 | 11.2 | 1.75 | 0.53 | 1.75 |
| 17 | 2 | 3 | 3.5 | 2.75 | 8 | 15 | 0.5 | 16 | 7 | 11.7 | 21 | 11.2 | 2 | 0.53 | 1.75 |
| 18 | 2 | 3 | 3.5 | 2.75 | 8 | 15 | 0.5 | 16 | 7 | 11.7 | 21 | 11.2 | 2.5 | 0.53 | 1.75 |
| 19 | 2 | 3 | 3.5 | 2.75 | 8 | 15 | 0.5 | 16 | 7 | 11.7 | 21 | 11.2 | 3 | 0.53 | 1.75 |
| 20 | 2 | 2.5 | 4 | 2.75 | 7 | 15 | 0.5 | 16 | 7 | 11.7 | 21 | 11.2 | 2 | 0.47 | 2 |
| 21 | 2 | 2.5 | 4 | 2.75 | 7 | 15 | 0.5 | 16 | 7 | 11.7 | 21 | 11.2 | 2.5 | 0.47 | 2 |
| 22 | 2 | 2.5 | 4 | 2.75 | 7 | 15 | 0.5 | 16 | 7 | 11.7 | 21 | 11.2 | 3 | 0.47 | 2 |
| 23 | 2 | 1.5 | 4 | 3 | 8 | 16 | 0 | 16 | 7 | 11.7 | 21 | 11.2 | 8 | 0.5 | 2 |
| 24 | 2 | 1.5 | 4 | 3 | 8 | 16 | 0 | 16 | 7 | 11.7 | 21 | 11.2 | 100 | 0.5 | 2 |
| 25 | 2 | 0.6 | 4.9 | 3 | 3.2 | 16 | 0 | 16 | 7 | 11.7 | 21 | 11.2 | 10 | 0.2 | 2.45 |
| 26 | 2 | 1.5 | 4 | 3 | 8 | 16 | 0 | 16 | 7 | 11.7 | 21 | 11.2 | 10 | 0.5 | 2 |

The inventors propose the shape of a projection of a resistance spot welding electrode that is capable of expanding a welding area, minimizing expulsion, and significantly increasing weld strength, based on Formulas 1 to 4, which has been verified using various experimental examples of Table 2. In the following formulas, w5 denotes an inner diameter of the projection 24 relative to the center of the opposing surface 25 of the resistance spot welding electrode 20, w6 denotes an outer diameter of the projection 24 relative to the center of the opposing surface 25 of the resistance spot welding electrode 20, and R denotes a radius of curvature of an end of the projection 24.

[Formula1]

$$w5/w6 \geq 1/4$$

[Formula2]

$$4\ mm \leq w5 < w6$$

[Formula3]

$$2\ mm \leq (w6-w5)/2 \leq 4\ mm$$

[Formula4]

$$(w6-w5)/4 < R \leq (w6-w5)/2$$

According to Formula 1, it is required that the inner diameter w5 of the projection 24 is equal to or greater than 25% of the outer diameter w6 of the projection 24 in order to provide a projection of a resistance spot welding electrode that is capable of expanding a welding area, minimizing expulsion, and significantly increasing weld strength. According to the experimental examples shown in Table 2, Experiments 11 to 24, and Experiment 26 satisfy the condition of Formula 1.

Meanwhile, when the inner diameter w5 of the projection 24 was smaller than 25% of the outer diameter w6 of the projection 24, welding tests were performed under the condition of Experiment 25 of Table 2 and the results are shown in FIGS. 26, 27A and 27B, respectively. FIG. 26 shows that welding was never performed and therefore almost no tensile strengths were measured. FIG. 27A shows that almost no weld indentations were generated and FIG. 27B shows that base metal plates were separated and therefore no results were achieved.

Furthermore, according to Formula 2, it is required that the inner diameter w5 of the projection 24 is equal to or greater than 4 mm but smaller than the outer diameter w6 of the projection 24 in order to provide a projection of a resistance spot welding electrode that is capable of expanding a welding area, minimizing expulsion, and greatly increasing weld strength. According to the experimental examples shown in Table 2, Experiments 11 to 24, and Experiment 26 satisfy the condition of Formula 2.

It was confirmed that a problem occurred in terms of actual applicability when the inner diameter w5 of the projection 24 is smaller than 4 mm. Particularly, the projection in Experiment 1 of Table 1 was broken, and the projection in Experiment 2 of Table 1 got stuck into and was unable to come out of a weld zone after the welding.

In addition, according to Formula 3, it is required that the thickness of the projection 24, i.e., a half of the difference between the outer diameter w6 of the projection 24 and the inner diameter w5 of the projection 24, ranges from 2 mm to 4 mm in order to provide a projection of a resistance spot welding electrode that is capable of expanding a welding area, minimizing expulsion, and greatly increasing weld strength. According to the experimental examples shown in Table 2, Experiments 15 to 24, and Experiment 26 satisfy the condition of Formula 3.

When the thickness of the projection 24 was smaller than 2 mm, welding tests were performed under the conditions of Experiments 11, 12, 13, 14 and 25 of Table 2 and the results are shown in FIG. 24A. As shown in FIGS. 24A and 27A, the welding was not sufficiently performed, an appropriate weld zone was very narrow, and weld strength was very low under these conditions.

Furthermore, according to Formula 4, it is required that the radius of curvature R of the end of the projection 24 is greater than 1/2 of the thickness of the projection 24 and is equal to or smaller than the thickness of the projection 24 in order to provide a projection of a resistance spot welding electrode that is capable of expanding a welding area, minimizing expulsion, and greatly increasing weld strength. According to the experimental examples shown in Table 2, Experiments 15 to 22 satisfy the condition of Formula 4.

When the radius of curvature radius R of the end of the projection 24 is equal to or smaller than 1/2 of the thickness of the projection 24, another projection is formed on the projection 24 and therefore not only a curved portion (24b of FIG. 7) but also a projected portion (24a of FIG. 7) contact the base metal plate in a welding process, thereby significantly affecting the quality of welding. On the other hand, when the radius of curvature R is greater than the thickness of the projection 24, welding tests were performed under the conditions of Experiments 23, 24, 25 and 26 of Table 2 and the results thereof are shown in FIGS. 26, 27A and 27B. When the thickness w3 of the projection 24 was relatively large and no curvature was applied, Experiment 23 showed that welding was almost never performed and thus very low tensile strengths were observed as shown in FIG. 26. In addition, for example, when the radius of curvature R has a value of 10 or 100 as in Experiments 24 to 26, although the tensile strength is rather high, an appropriate welding range is very narrow and the strength is relatively lower than the results of other appropriate radii of curvature (Experiments 15 to 22).

Hereinafter provided will be a description of tensile strengths, shape of surface and the results of peel test of the welds where various resistance spot welding electrodes of Table 2 have been applied.

FIG. 23 schematically shows the tensile strengths of the welds where the resistance spot welding methods and electrodes of Table 2 have been applied. Furthermore, FIGS. 24A and 24B schematically show the surface images of the welds where the resistance spot welding methods and electrodes of Table 2 have been applied, and FIGS. 25A and 25B schematically show the results of peel test of the welds where the resistance spot welding methods and electrodes of Table 2 have been applied.

In experimental examples of the present invention to be described with reference to FIGS. 23 to 25B, GI980CP steel sheets of 1.0 mm in thickness were used as base metal plates, and the required tensile strength of the steel sheets was 6.6 kN. A pressure of 300 Kgf was applied and a 21-cycle weld time was applied.

First, referring to FIG. 23, when the resistance spot welding electrodes according to Experiments 11 and 12 of Table 2 were used, the required tensile strength was not met even when welding currents ranged from 16 kA to 18 kA. On the other hand, when the resistance spot welding electrodes according to Experiments 15 to 22 of Table 2 were used, the required tensile strength was mostly met in an appropriate range of welding current. Meanwhile, when the resistance spot welding electrodes according to Experiments 13 to 22 of Table 2 were used, expulsion occurred under when the welding current was high, but button fracture simultaneously occurred, thereby preventing interfacial fracture.

Meanwhile, referring to 24A and 24B, the ring-shaped projection of the electrode did not completely contact the base metal plate and thus some parts were not electrified. However, according to the results of tensile-shear strength testing shown in FIG. 23, although contact welding was rather insufficient, total welding area and length increased, thereby significantly increasing the strength. Furthermore, even in a region where expulsion occurred, since molten metal did not accumulate in a single place and therefore the amount of scattering metal was so small that the strength did not decrease at all.

FIGS. 25A and 25B show the results of peel tests to observe the fracture after welding. Referring to FIGS. 25A and 25B, button fractures occurred in Experiments 13 to 22 of Table 2. This means that fractures occurred in base metals or heat-affected zones, and almost no interfacial fracture occurred. The interfacial fracture is a separation of two test specimens when GI980CP steel sheets are welded using a conventional electrode. However, in Experiments 11 and 12 of Table 2, when the welding currents were 22 kA and 19 kA, respectively, button fracture did not occur but expulsion occurred. That is, interfacial fracture occurred.

The aforementioned description will be summarized that the inner diameter w5 of the projection 24 may be required to be equal to or greater than 25% of the outer diameter w6 of the projection 24 in resistance spot welding electrodes according to embodiments of the present invention, in order to expand a welding area, minimize expulsion, and significantly increase weld strength,. Alternatively, in the resistance spot welding electrodes according to embodiments of the present invention, the inner diameter w5 of the projection 24 may be required to be equal to or greater than 4 mm and smaller than the outer diameter w6 of the projection 24. Meanwhile, in the resistance spot welding electrodes according to embodiments of the present invention, the thickness of the projection 24 (i.e., a half of the difference between the outer diameter w6 of the projection 24 and the inner diameter w5 of the projection 24) may be required to range from 2 mm to 4 mm. Furthermore, the radius of curvature R of the end of the projection 24 may be required to be greater than a half of the thickness of the projection 24 and to be equal to or smaller than the thickness of the projection 24 in the resistance spot welding electrodes according to embodiments of the present invention, in order to expand a welding area, minimize expulsion, and significantly increase weld strength.

While the present invention has been particularly shown and described with reference to embodiments thereof, a person having ordinary skill in the art will understand that various changes in form and details may be made therein without departing from the spirit and scope of the present invention as defined by the following claims.

## Claims

**1.** A resistance spot welding electrode comprising:

a ring-shaped projection protruding from an opposing surface that faces a base metal, and surrounding a center of the opposing surface,
wherein an end of the projection that is capable of contacting the base metal has a radius of curvature R, and wherein the projection satisfies conditions defined by the following Formulas 1 to 3:

[Formula 1]

$$w5/w6 \geq 1/4,$$

[Formula 2]

$$4\ mm \leq w5 < w6,$$

and

[Formula 3]

$$2\ mm \leq (w6-w5)/2 \leq 4\ mm,$$

wherein w5 denotes an inner diameter of the projection relative to the center of the opposing surface, and w6 denotes an outer diameter of the projection relative to the center of the opposing surface.

**2.** The resistance spot welding electrode of claim 1,
wherein the end of the projection further satisfies a condition defined by the following Formula 4:

[Formula 4]

$$(w6-w5)/4 < R \leq (w6-w5)/2.$$

**3.** The resistance spot welding electrode of claim 1,
wherein the outer diameter of the projection is smaller than an outer diameter of the opposing surface.

**4.** The resistance spot welding electrode of claim 1,
wherein the outer diameter of the projection is equal to an outer diameter of the opposing surface.

**5.** The resistance spot welding electrode of claim 1,
wherein a recess is provided in the center of the opposing surface in a direction away from the base metal.

**6.** The resistance spot welding electrode of claim 5,
wherein the inner diameter of the projection is greater than a diameter of the recess, and
wherein the outer diameter of the projection is smaller than an outer diameter of the opposing surface.

**7.** The resistance spot welding electrode of claim 5,
wherein the inner diameter of the projection is greater than a diameter of the recess, and
wherein the outer diameter of the projection is equal to an outer diameter of the opposing surface.

**8.** The resistance spot welding electrode of claim 5,
wherein the inner diameter of the projection is equal to a diameter of the recess, and
wherein the outer diameter of the projection is smaller than an outer diameter of the opposing surface.

**9.** The resistance spot welding electrode of claim 1,
wherein a pressure is applied through the projection to the base metal and electrification is performed so that a nugget is generated on the base metal that corresponds to the projection.

**10.** A resistance spot welding method comprising:

providing a first resistance spot welding electrode on a surface of a first base metal, the first resistance spot welding electrode comprising a projection that protruding from an opposing surface that faces the first base metal, surrounding a center of the opposing surface, comprising an end that is capable of contacting the first base metal and having a radius of curvature radius R, and satisfying conditions defined by the following Formulas 1 to 3:

[Formula 1]

$$w5/w6 \geq 1/4,$$

[Formula 2]

$$4\ mm \leq w5 < w6,$$

and

[Formula 3]

$$2\ mm \leq (w6-w5)/2 \leq 4\ mm,$$

providing a second resistance spot welding electrode on a surface of a second base metal, the second resistance spot welding electrode comprising a projection that protruding from an opposing surface that faces the second base metal, surrounding a center of the opposing surface, comprising an end that is capable of contacting the second base metal and having a radius of curvature radius R, and satisfying conditions defined by the following Formulas 1 to 3:

[Formula 1]

$$w5/w6 \geq 1/4,$$

[Formula 2]

$$4\ mm \leq w5 < w6,$$

and

[Formula 3]

$$2\ mm \leq (w6-w5)/2 \leq 4\ mm,$$

and
forming a nugget in the base metals using the first and second resistance spot welding electrodes,
wherein w5 denotes an inner diameter of the projection relative to the center of the opposing surface, and w6 denotes an outer diameter of the projection relative to the center of the opposing surface.

**11.** The resistance spot welding method of claim 10,
wherein the end of the projection further satisfies a condition defined by Formula 4:

[Formula 4]

$$(w6-w5)/4 < R \leq (w6-w5)/2.$$

**12.** The resistance spot welding method of claim 10,
wherein the providing of the first resistance spot welding electrode on the surface of the first base metal and the providing of the second resistance spot welding electrode on the surface of the second base metal comprise:

providing the projection disposed on a surface of the first base metal and the projection disposed on a surface of the second base metal in a symmetrical manner relative to the first and second base metals.

**13.** The resistance spot welding method of claim 10, wherein the forming of the nugget in the base metals comprises:

applying a pressure through the projections to the base metals and electrifying the base metals so that the nugget is generated on the base metals that correspond to the projections.

**14.** A resistance spot welding method comprising:

providing a first resistance spot welding electrode on a surface of a first base metal, the first resistance spot welding electrode comprising a projection protruding from an opposing surface that faces the first base metal, surrounding a center of the opposing surface, comprising an end that is capable of contacting the first base metal and having a radius of curvature radius R, and satisfying conditions defined by the following Formulas 1 to 3:

[Formula 1]

$$w5/w6 \geq 1/4,$$

[Formula 2]

$$4\ \text{mm} \leq w5 < w6,$$

and

[Formula 3]

$$2\ \text{mm} \leq (w6-w5)/2 \leq 4\ \text{mm};$$

providing a second resistance spot welding electrode on a surface of a second base metal, the second resistance spot welding electrode having a flat surface that faces and directly contacts the second base metal; and forming a nugget in the base metals using the first and second resistance spot welding electrodes,
wherein w5 denotes an inner diameter of the projection relative to the center of the opposing surface, and w6 denotes an outer diameter of the projection relative to the center of the opposing surface.

**15.** The resistance spot welding method of claim 14, wherein the end of the projection further satisfies a condition defined by the following Formula 4:

[Formula 4]

$$(w6-w5)/4 < R \leq (w6-w5)/2.$$

**16.** The resistance spot welding method of claim 14, wherein the forming of the nugget in the base metals comprises:

applying a pressure through the projections to the base metals and electrifying the base metals so that the nugget is generated on the base metals that correspond to the projections.

**17.** A resistance spot welding electrode comprising:

a ring-shaped projection protruding from an opposing surface that faces a base metal, and surrounding a center of the opposing surface in order to expand a welding area, minimize expulsion, and significantly increase weld strength,
wherein the projection comprises:

a first portion extending in a direction parallel to the opposing surface and having a constant cross-sectional diameter; and
a second portion provided on an end of the first portion, contacting the base metal, and having a radius of curvature R,

wherein a recess is provided in the center of the opposing surface in a direction away from the base metal in order to facilitate a dressing process for removing a contamination coating formed due to repeatedly performed welding,
wherein a pressure is applied through the projection to the base metal and the base metal is electrified so that a nugget is generated on the base metal that corresponds to the projection, and
wherein the projection simultaneously satisfies all the conditions defined by the following Formulas 1 to 4:

[Formula 1]

$$w5/w6 \geq 1/4,$$

[Formula 2]

$$4\ mm \leq w5 < w6,$$

[Formula 3]

$$2\ mm \leq (w6-w5)/2 \leq 4\ mm,$$

and

[Formula 4]

$$(w6-w5)/4 < R \leq (w6-w5)/2,$$

wherein w5 denotes an inner diameter of the projection relative to the center of the opposing surface, and w6 denotes an outer diameter of the projection relative to the center of the opposing surface.

**18.** A resistance spot welding method comprising:

providing a first resistance spot welding electrode on a surface of a first base metal, the resistance spot welding electrode comprising a ring-shaped projection protruding from an opposing surface that faces the first base metal, and surrounding a center of the opposing surface in order to expand a welding area, minimize expulsion, and significantly increase weld strength;
providing a second resistance spot welding electrode on a surface of a second base metal, the second resistance spot welding electrode comprising a projection that protruding from an opposing surface that faces the second base metal, surrounding a center of the opposing surface in order to expand a welding area, minimize expulsion, and significantly increase weld strength; and
forming a nugget in the base metals using the first and second resistance spot welding electrodes,
wherein the projection comprises:

a first portion extending in a direction parallel to the opposing surface and having a uniform cross-sectional diameter; and
a second portion formed on an end of the first portion, contacting the base metal, and having a radius of curvature R,

wherein a recess is formed in the center of the opposing surface in a direction away from the base metal in order to facilitate a dressing process for removing a contamination coating formed due to repeatedly performed welding,
wherein a pressure is applied through the projection to the base metal and the base metal is electrified so that a nugget is generated on the base metal that corresponds to the projection, and
wherein the projection simultaneously satisfies all the conditions defined by the following Formulas 1 to 4:

[Formula 1]

$$w5/w6 \geq 1/4,$$

[Formula 2]

$$4\text{ mm} \leq w5 < w6,$$

[Formula 3]

$$2\text{ mm} \leq (w6-w5)/2 \leq 4\text{ mm},$$

and

[Formula 4]

$$(w6-w5)/4 < R \leq (w6-w5)/2,$$

wherein w5 denotes an inner diameter of the projection relative to the center of the opposing surface, and w6 denotes an outer diameter of the projection relative to the center of the opposing surface.

# FIG. 1

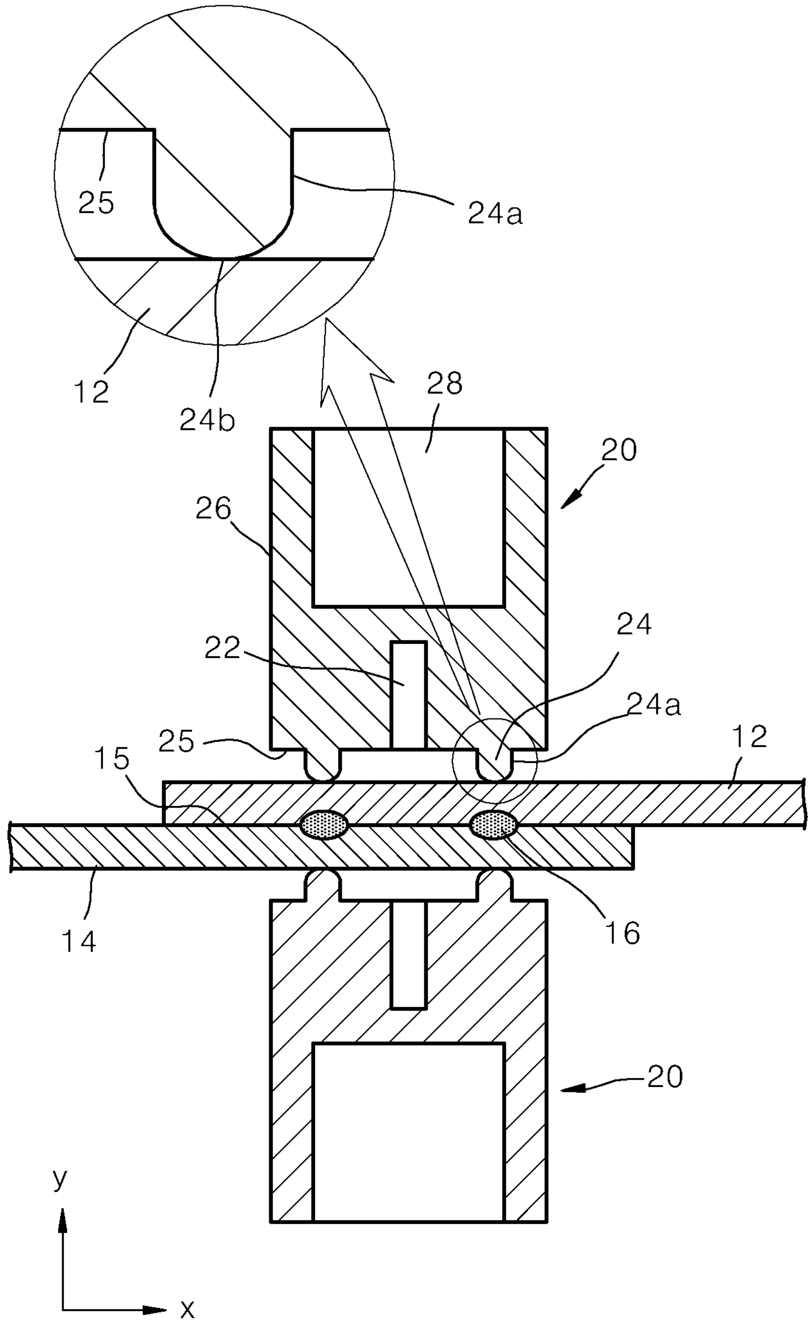

FIG. 2

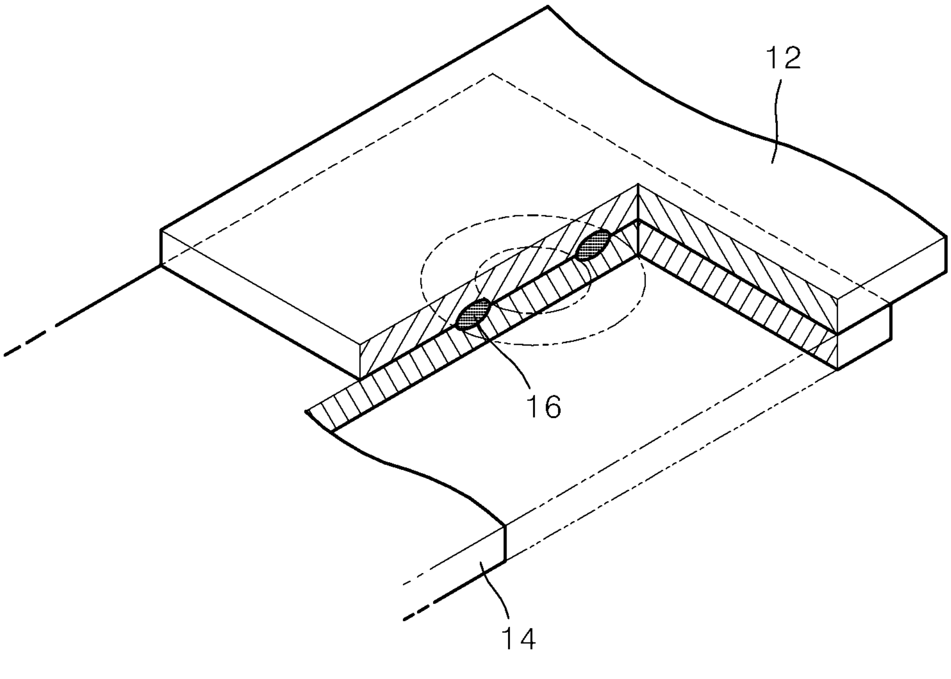

FIG. 3

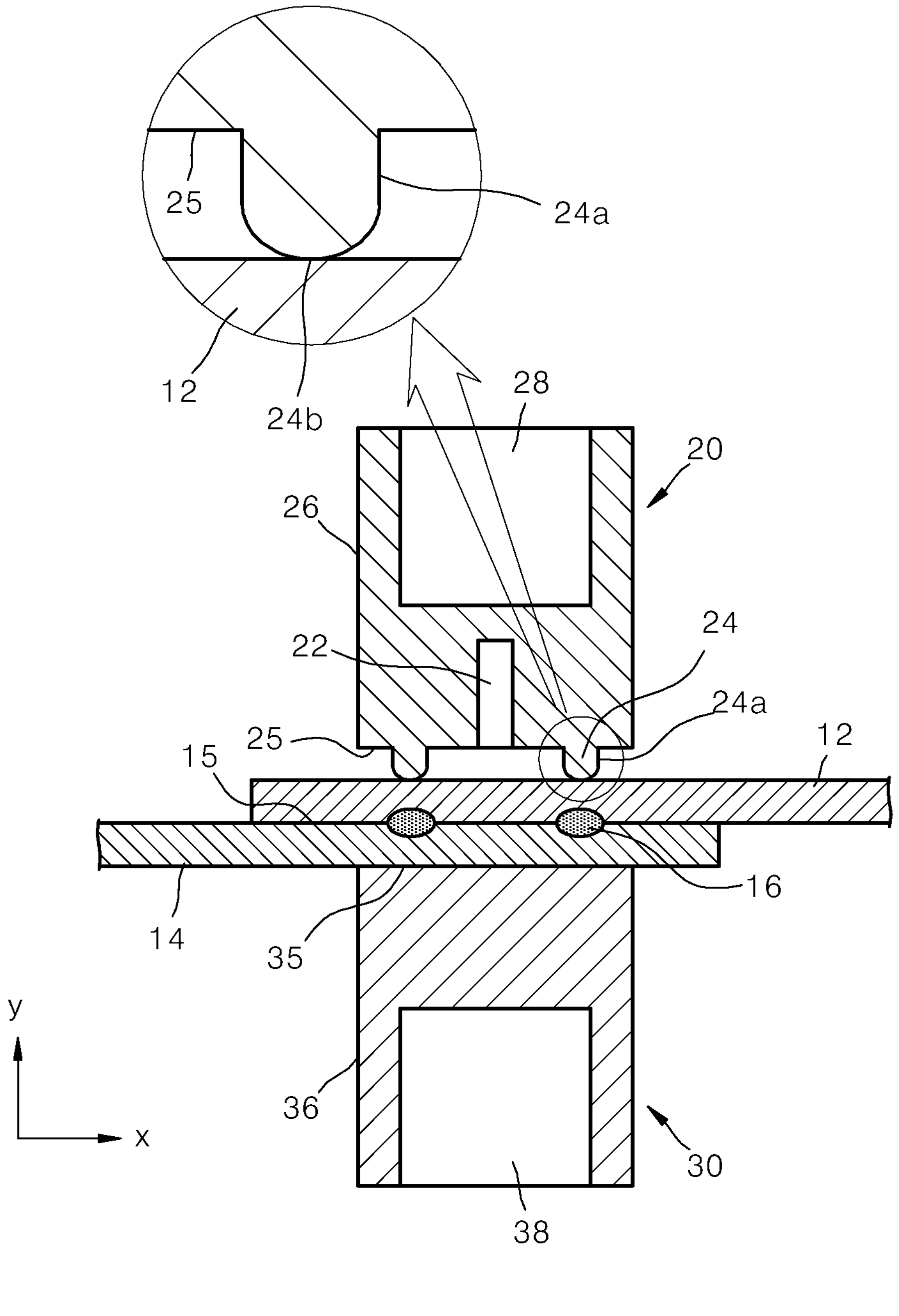

FIG. 4

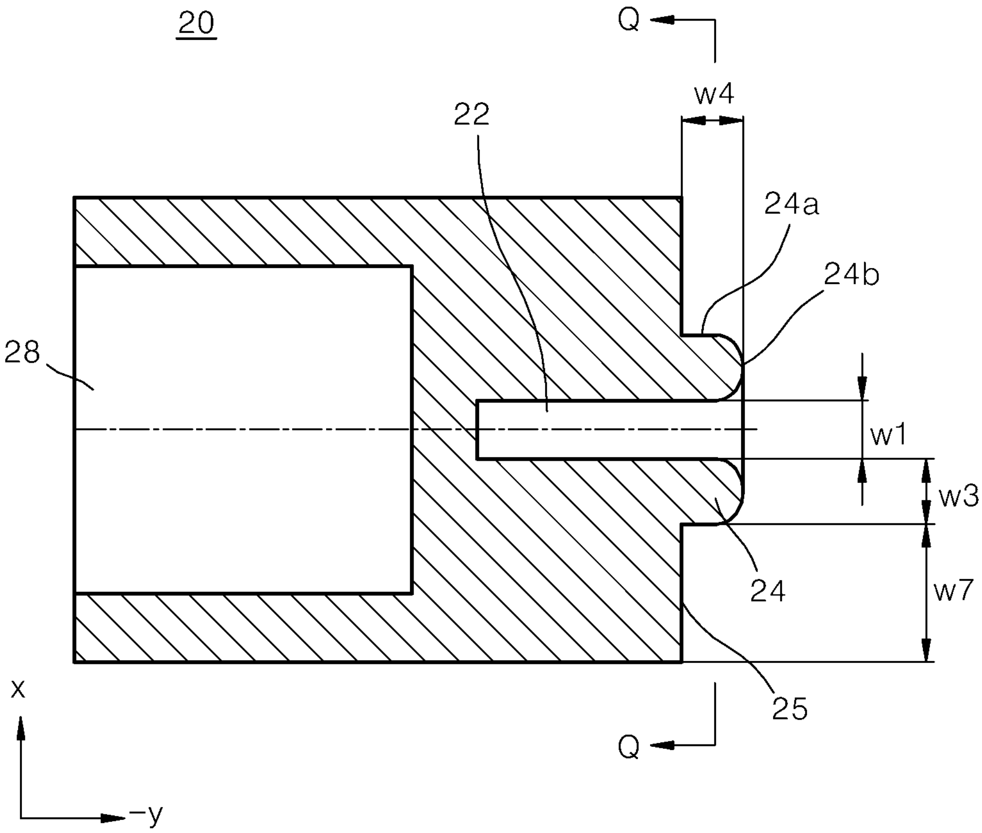

FIG. 5

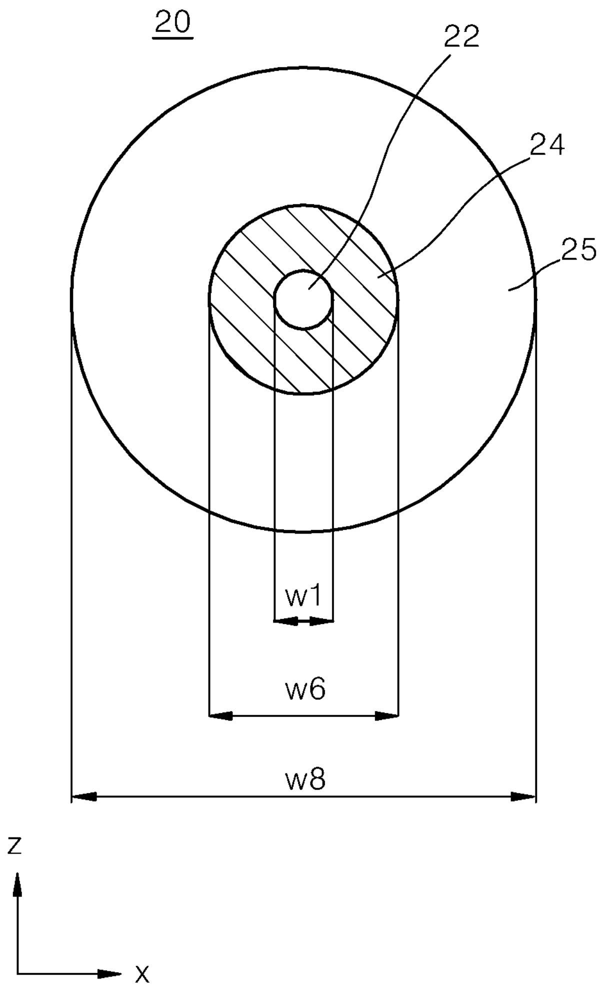

FIG. 6

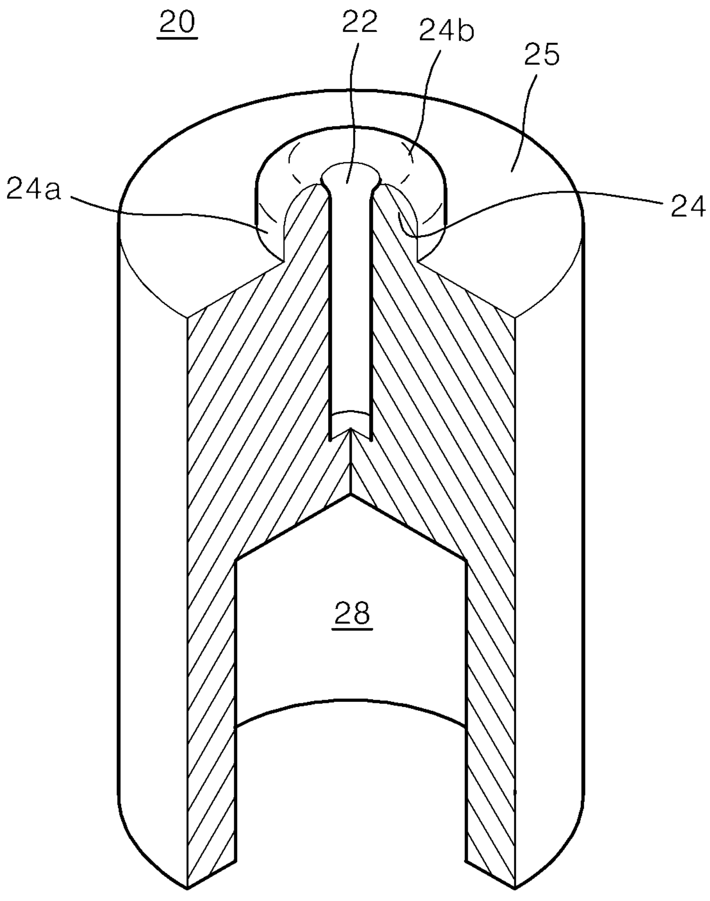

# FIG. 7

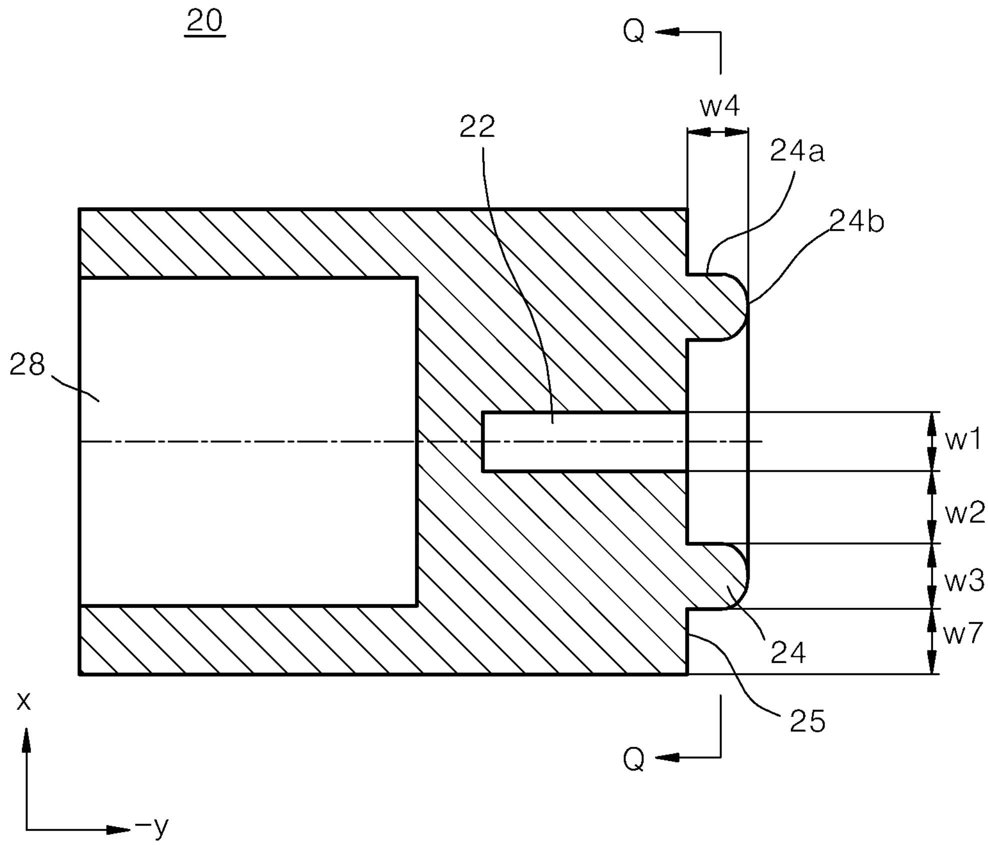

FIG. 8

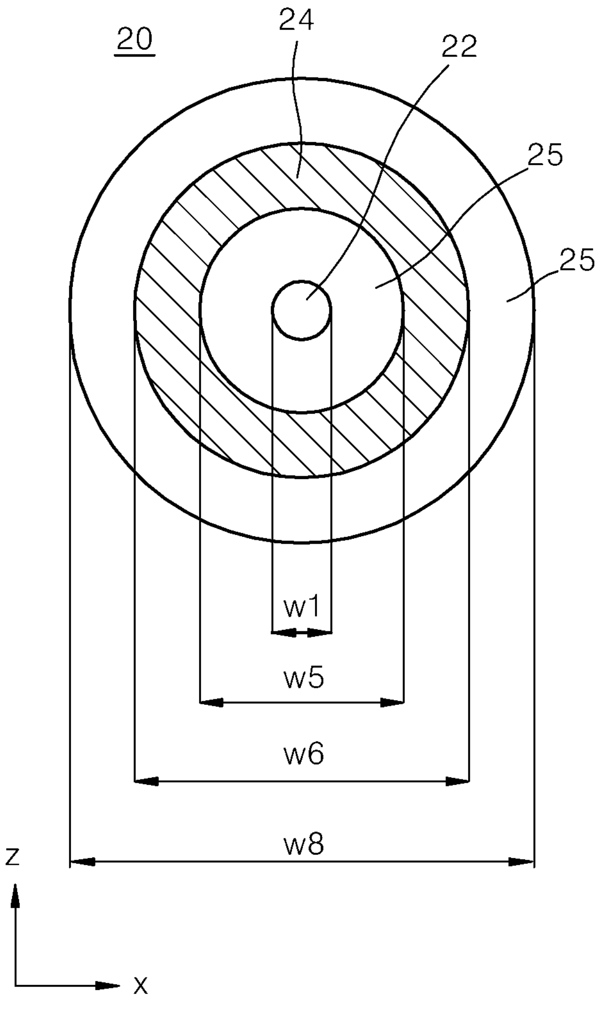

FIG. 9

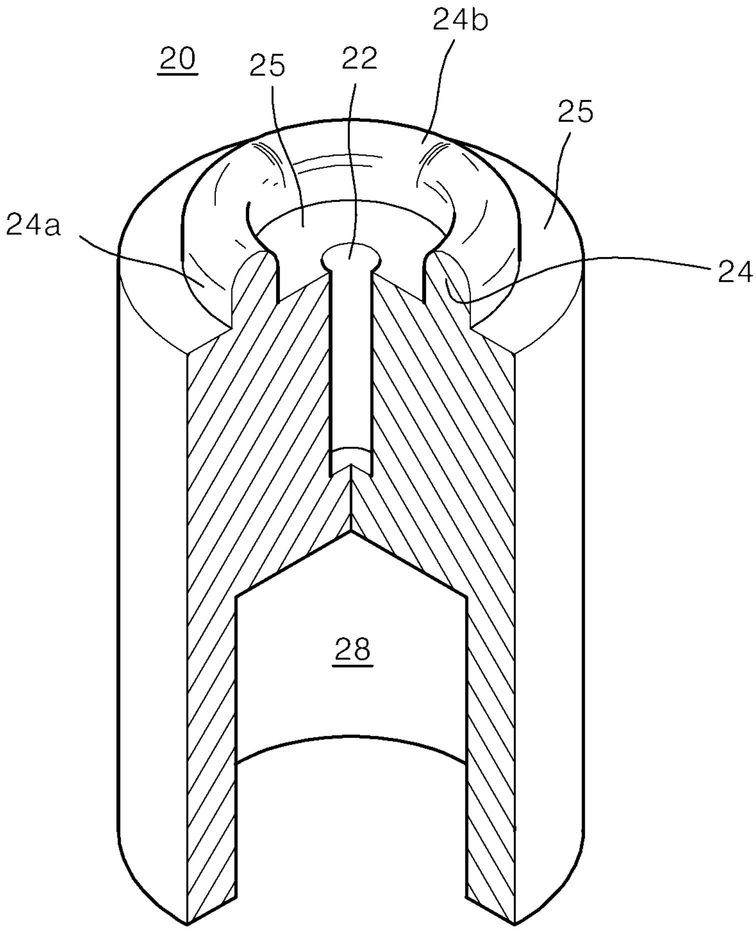

FIG. 10

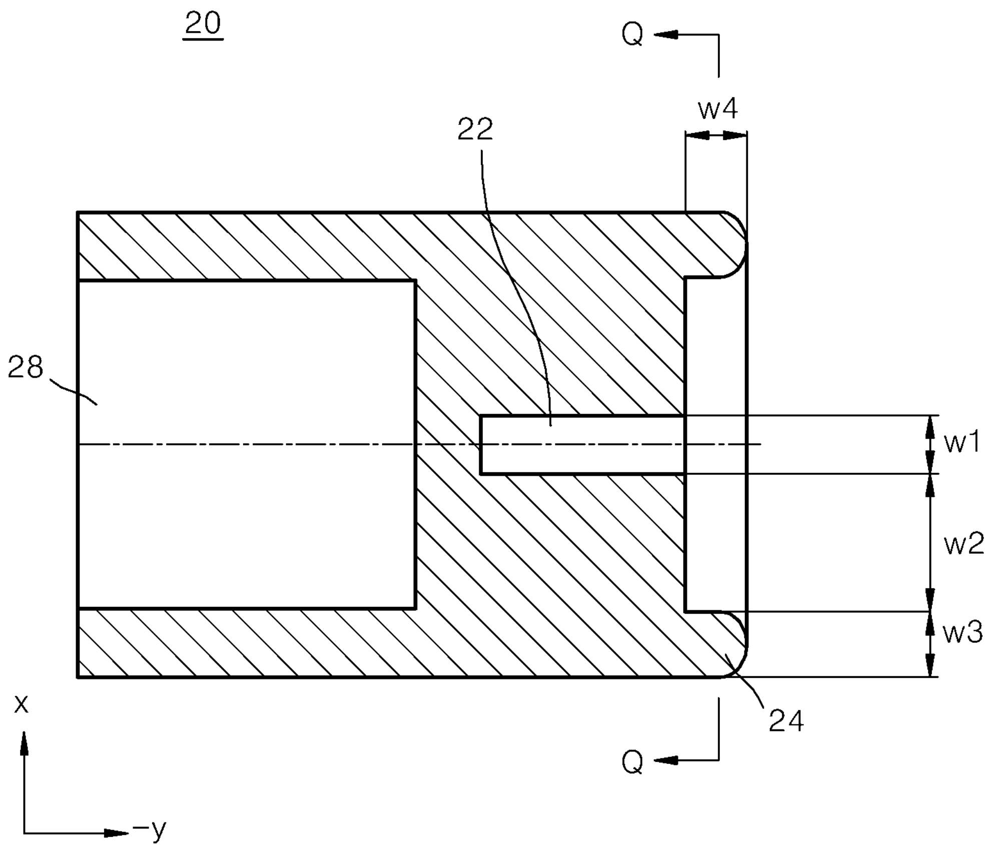

FIG. 11

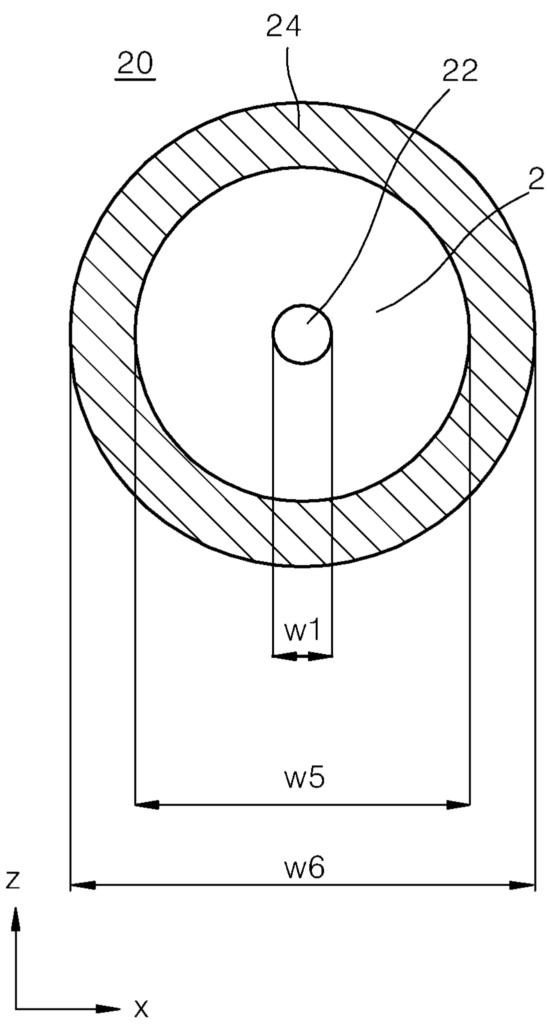

FIG. 12

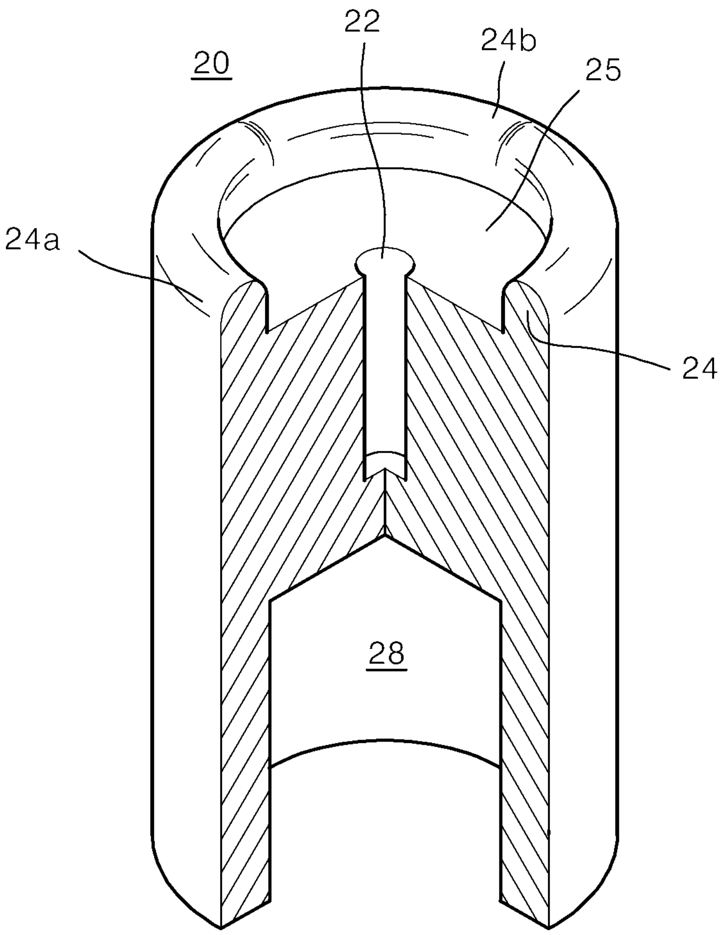

FIG. 13

| | 8 kA | 9 kA | 10 kA | 11 kA | 12 kA | 13 kA | 14 kA | 15 kA | 16 kA | 17 kA | 18 kA |
|---|---|---|---|---|---|---|---|---|---|---|---|
| No.4 | | | | 0 | 20.1 | 23.8 | 26.6 ◆ | 24.7 ◆ | 25.8 ◆ | 26.7 ◆ | |
| No.4_1 | | | 0 | 22.8 ◆ | 22.3 ◆ | 23.6 ◆ | 9.5 | | | | |
| No.5 | | | | 0 | 10.1 | 23.3 ◆ | 24.7 ◆ | 28.2 ◆ | 24.4 ◆ | | |
| No.5_1 | | | | | 0 | 14.2 ◆ | 23.8 ◆ | 23.5 ◆ | 26.4 ◆ | 28.5 | |
| No.6 | | | | | 0 | 15.9 | 11.2 ◆ | 22.9 ◆ | 25.2 ◆ | 29.0 ◆ | |
| No.6_1 | | | | | | 3.6 | 15.5 | 18.2 ◆ | 27.0 ◆ | | |
| No.7 | | | 0 | 4.6 | 15.0 | 22.0 ◆ | 28.0 ◆ | 25.5 ◆ | | | |
| No.7_1 | | | | 0 | 10.9 | 20.0 | 22.9 | 27.4 | 29.8 | | |
| No.8 | | | | | | 0 | 10.0 | 25.4 | 26.1 ◆ | 28.5 ◆ | 32.4 ◆ |
| No.8_1 | | | | | 0 | 16.2 | 15.9 | 23.0 ◆ | 32.0 ◆ | 30.0 ◆ | |
| No.9 | | | 0 | 8.8 | 16.3 | 22.7 ◆ | 22.6 ◆ | 29.8 ◆ | | | |
| No.9_1 | | | 0 | 2.8 | 21.2 ◆ | 28.3 ◆ | 25.6 ◆ | 25.4 ◆ | | | |
| No.10 | 0 | 8.8 | 16.5 ◆ | 16.4 ◆ | 17.6 ◆ | 20.1 ◆ | | | | | |
| No.10_1 | | | 0 | 13.0 | 14.7 ◆ | 16.0 ◆ | 25.9 ◆ | | | | |

SMALLER THAN REQUIRED TENSILE STRENGTH
NOT SMALLER THAN REQUIRED TENSILE STRENGTH
OCCURRENCE OF EXPULSION

± Unit: kN
◆ BUTTON FRACTURE

FIG. 14A

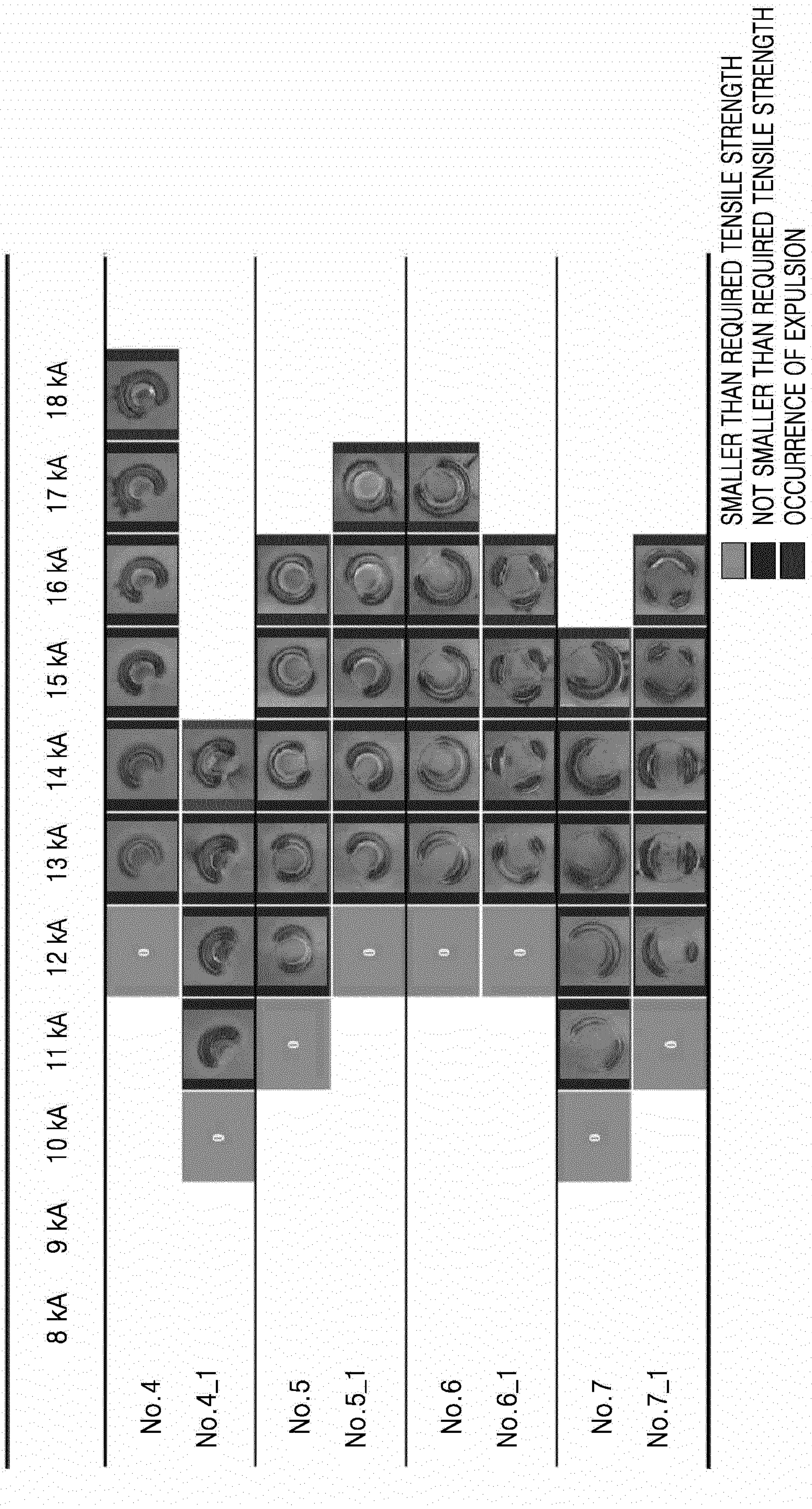
8 kA
9 kA
10 kA
11 kA
12 kA
13 kA
14 kA
15 kA
16 kA
17 kA
18 kA
No.4
No.4_1
No.5
No.5_1
No.6
No.6_1
No.7
No.7_1
SMALLER THAN REQUIRED TENSILE STRENGTH
NOT SMALLER THAN REQUIRED TENSILE STRENGTH
OCCURRENCE OF EXPULSION

FIG. 14B

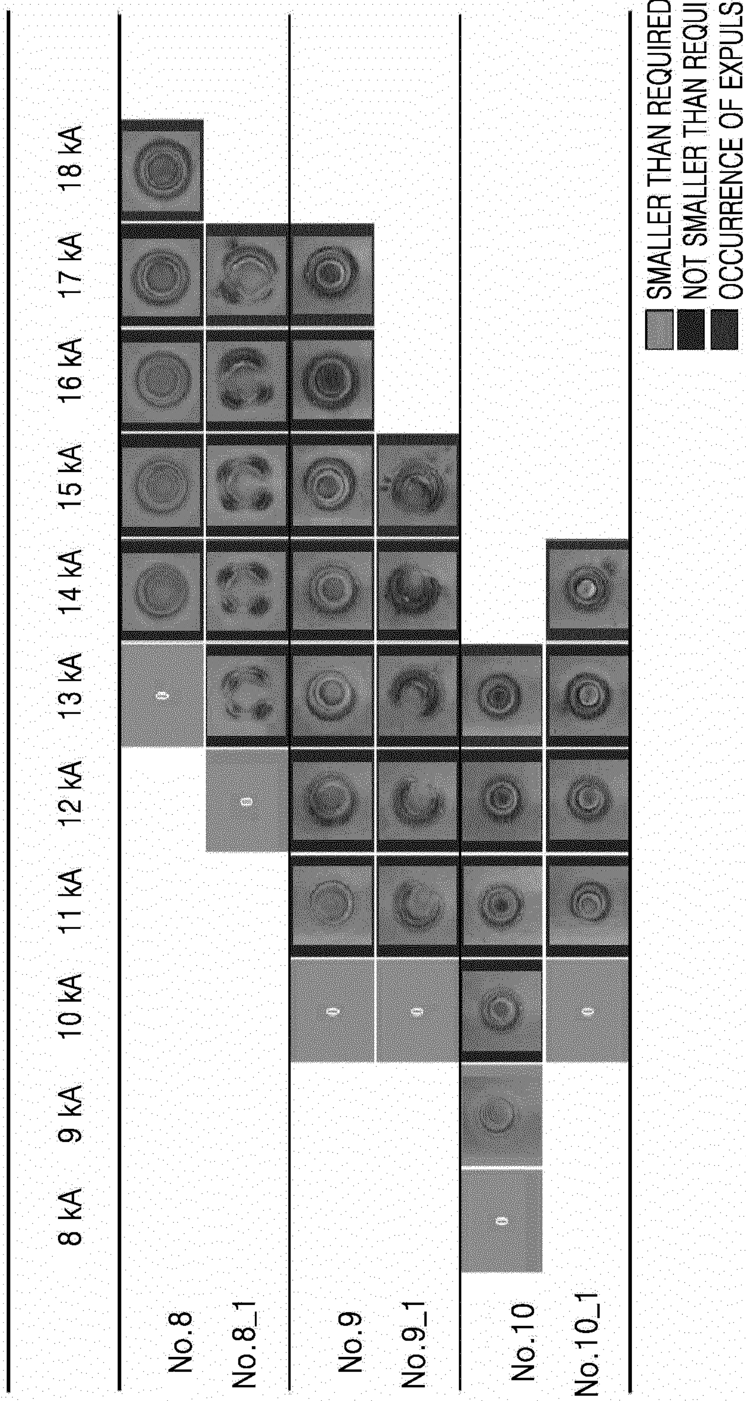
8 kA
9 kA
10 kA
11 kA
12 kA
13 kA
14 kA
15 kA
16 kA
17 kA
18 kA
No.8
No.8_1
No.9
No.9_1
No.10
No.10_1
SMALLER THAN REQUIRED TENSILE STRENGTH
NOT SMALLER THAN REQUIRED TENSILE STRENGTH
OCCURRENCE OF EXPULSION

FIG. 15A

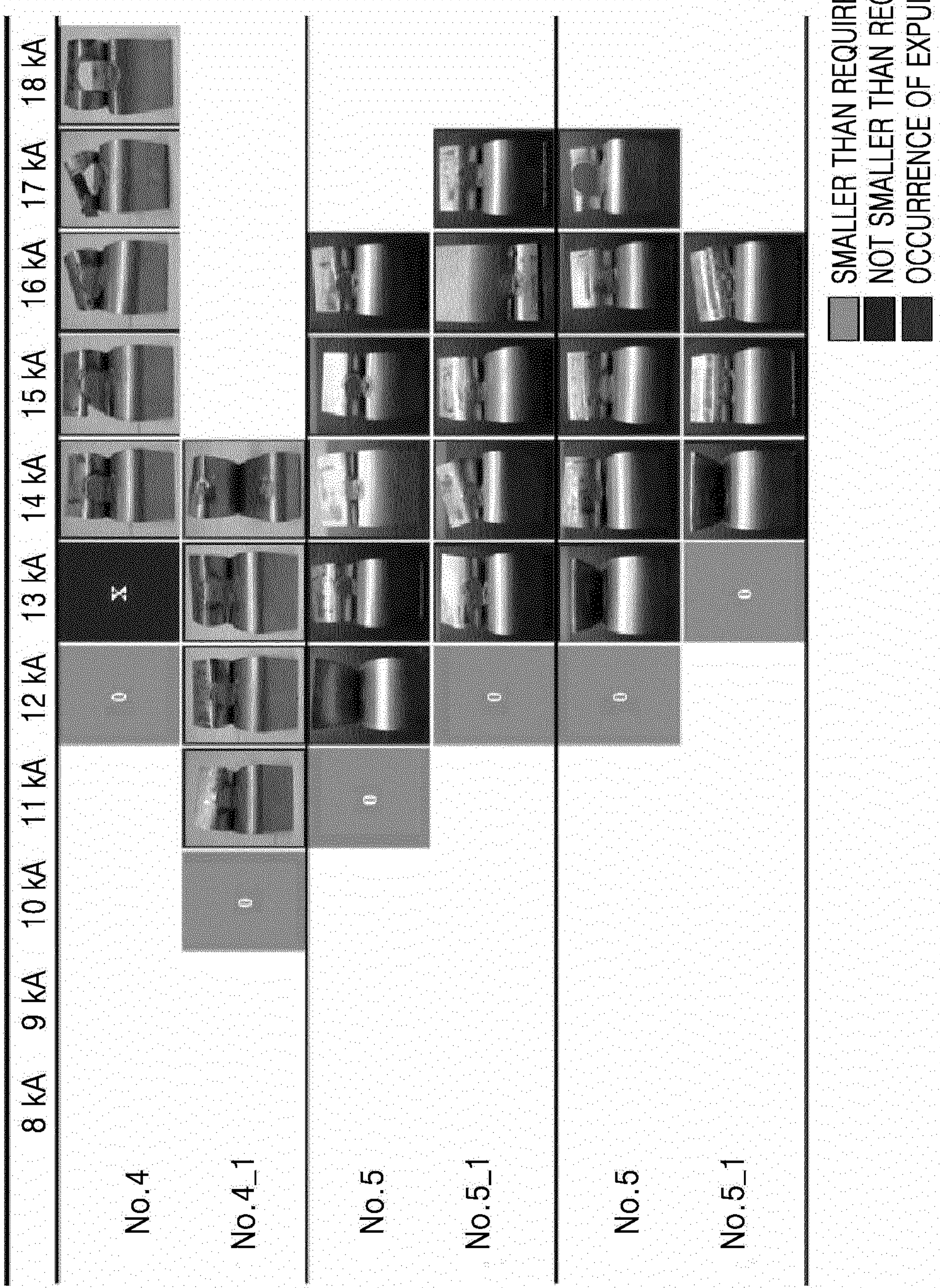
8 kA
9 kA
10 kA
11 kA
12 kA
13 kA
14 kA
15 kA
16 kA
17 kA
18 kA
No.4
No.4_1
No.5
No.5_1
No.5
No.5_1
SMALLER THAN REQUIRED TENSILE STRENGTH
NOT SMALLER THAN REQUIRED TENSILE STRENGTH
OCCURRENCE OF EXPULSION

FIG. 15B

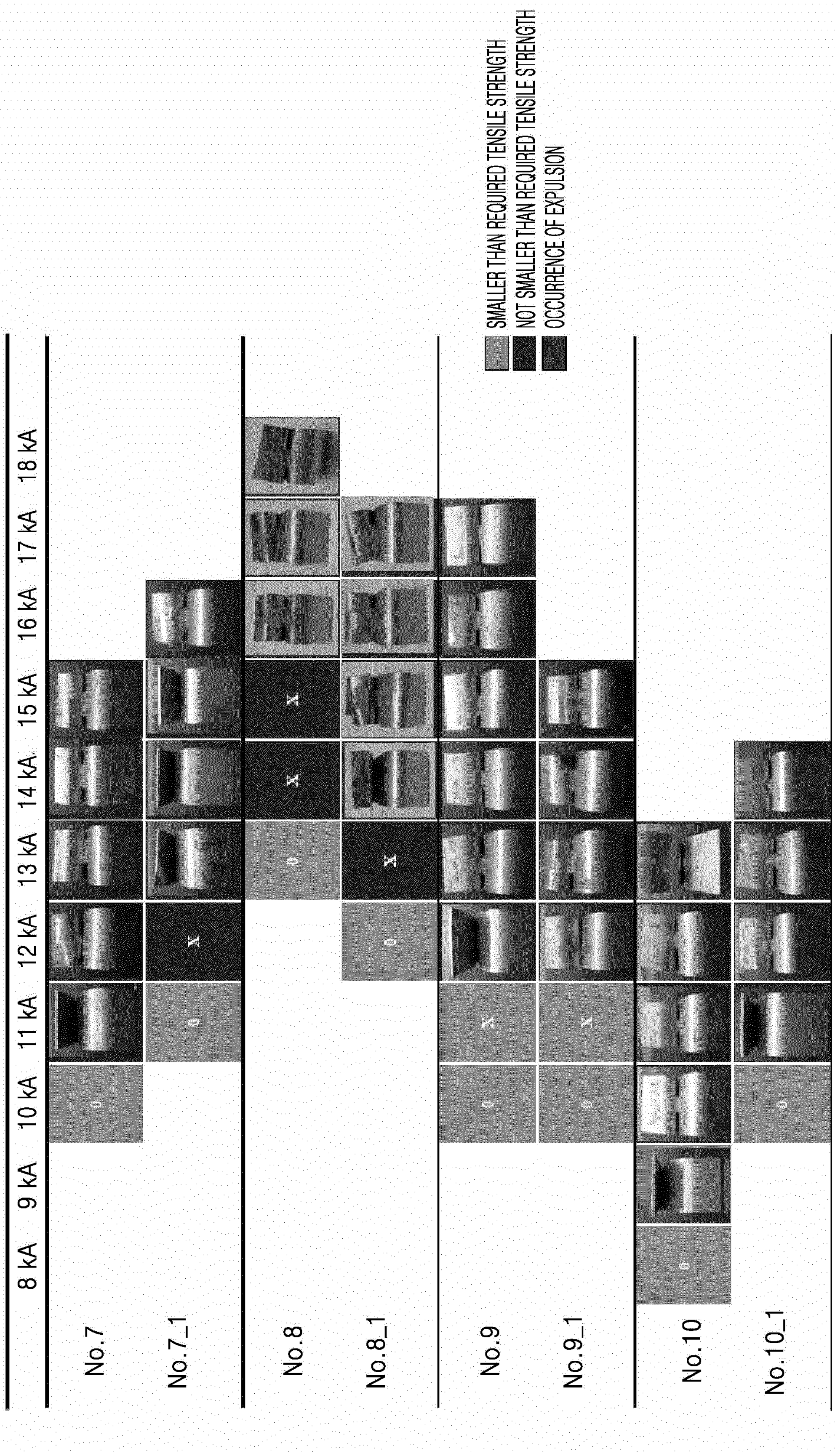
8 kA
9 kA
10 kA
11 kA
12 kA
13 kA
14 kA
15 kA
16 kA
17 kA
18 kA
No.7
No.7_1
No.8
No.8_1
No.9
No.9_1
No.10
No.10_1
SMALLER THAN REQUIRED TENSILE STRENGTH
NOT SMALLER THAN REQUIRED TENSILE STRENGTH
OCCURRENCE OF EXPULSION

FIG. 16A

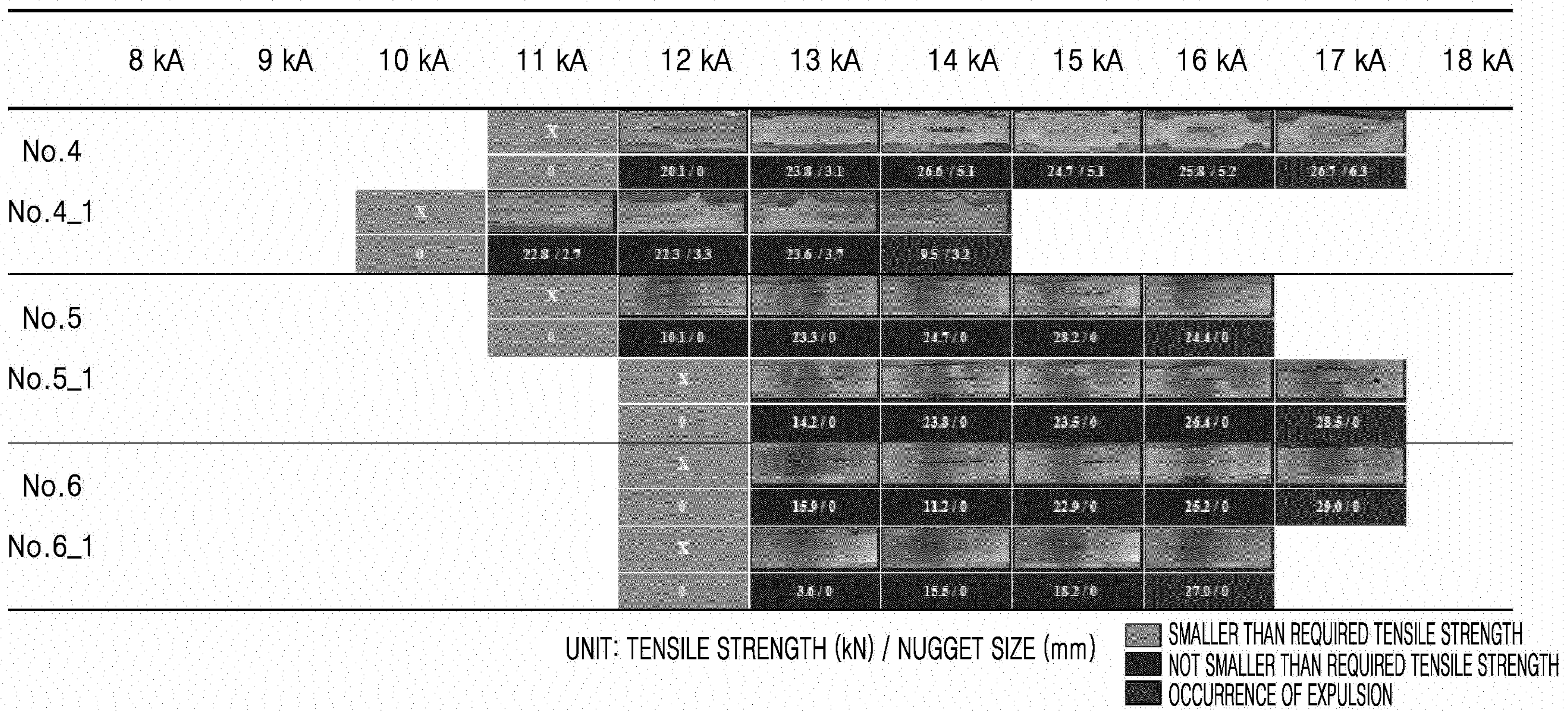
8 kA
9 kA
10 kA
11 kA
12 kA
13 kA
14 kA
15 kA
16 kA
17 kA
18 kA
No.4
X
0
20.1 / 0
23.8 / 3.1
26.6 / 5.1
24.7 / 5.1
25.8 / 5.2
26.7 / 6.3
No.4_1
X
0
22.8 / 2.7
22.3 / 3.3
23.6 / 3.7
9.5 / 3.2
No.5
X
0
10.1 / 0
23.3 / 0
24.7 / 0
28.2 / 0
24.4 / 0
No.5_1
X
0
14.2 / 0
23.8 / 0
23.5 / 0
26.4 / 0
28.5 / 0
No.6
X
0
15.9 / 0
11.2 / 0
22.9 / 0
25.2 / 0
29.0 / 0
No.6_1
X
0
3.6 / 0
15.5 / 0
18.2 / 0
27.0 / 0
UNIT: TENSILE STRENGTH (kN) / NUGGET SIZE (mm)
SMALLER THAN REQUIRED TENSILE STRENGTH
NOT SMALLER THAN REQUIRED TENSILE STRENGTH
OCCURRENCE OF EXPULSION

# FIG. 16B

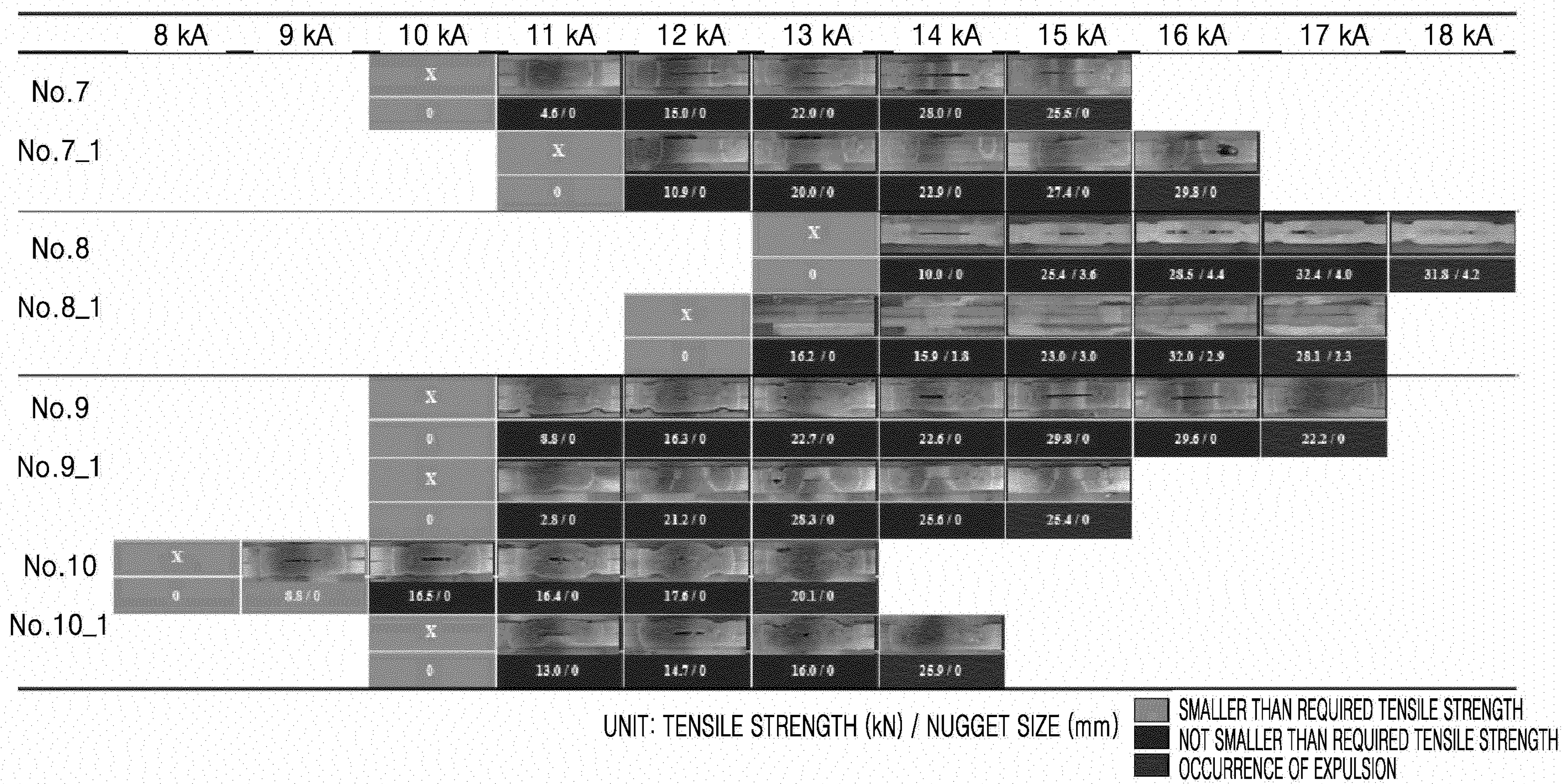
8 kA
9 kA
10 kA
11 kA
12 kA
13 kA
14 kA
15 kA
16 kA
17 kA
18 kA
No.7
X
0
4.6 / 0
15.0 / 0
22.0 / 0
28.0 / 0
25.5 / 0
No.7_1
X
0
10.9 / 0
20.0 / 0
22.9 / 0
27.4 / 0
29.8 / 0
No.8
X
0
10.0 / 0
25.4 / 3.6
28.5 / 4.4
32.4 / 4.0
31.8 / 4.2
No.8_1
X
0
16.2 / 0
15.9 / 1.8
23.0 / 3.0
32.0 / 2.9
28.1 / 2.3
No.9
X
0
8.8 / 0
16.3 / 0
22.7 / 0
22.6 / 0
29.8 / 0
29.6 / 0
22.2 / 0
No.9_1
X
0
2.8 / 0
21.2 / 0
28.3 / 0
25.6 / 0
25.4 / 0
No.10
X
0
8.8 / 0
16.5 / 0
16.4 / 0
17.6 / 0
20.1 / 0
No.10_1
X
0
13.0 / 0
14.7 / 0
16.0 / 0
25.9 / 0
UNIT: TENSILE STRENGTH (kN) / NUGGET SIZE (mm)
SMALLER THAN REQUIRED TENSILE STRENGTH
NOT SMALLER THAN REQUIRED TENSILE STRENGTH
OCCURRENCE OF EXPULSION

FIG. 17A

| WELDING CURRENT (kA) | 5 | 6 | 7 | 8 |
|---|---|---|---|---|
| CROSS SECTION | 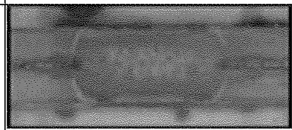 | 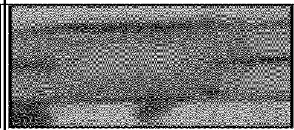 | 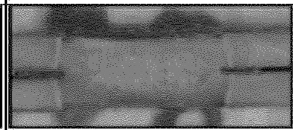 | 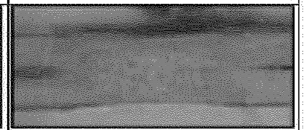 |
| TENSILE STRENGTH (kN) / NUGGET SIZE (mm) | 6.5 / 4.3 | 10.2 / 4.9 | 12.7 / 5.1 | 12.4 / 5.2 |

FIG. 17B

| WELDING CURRENT (kA) | 6 | 7 | 8 | 9 |
|---|---|---|---|---|
| CROSS SECTION | 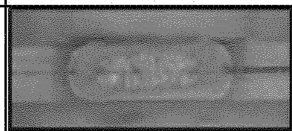 | 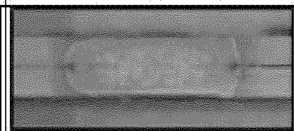 | 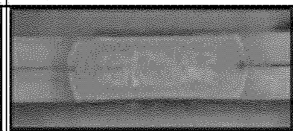 | 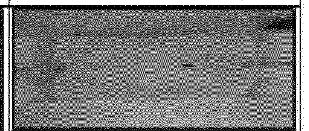 |
| TENSILE STRENGTH (kN) / NUGGET SIZE (mm) | 5.7 / 4.8 | 12.8 / 5.6 | 14.1 / 5.8 | 18.7 / 6.2 |

FIG. 18

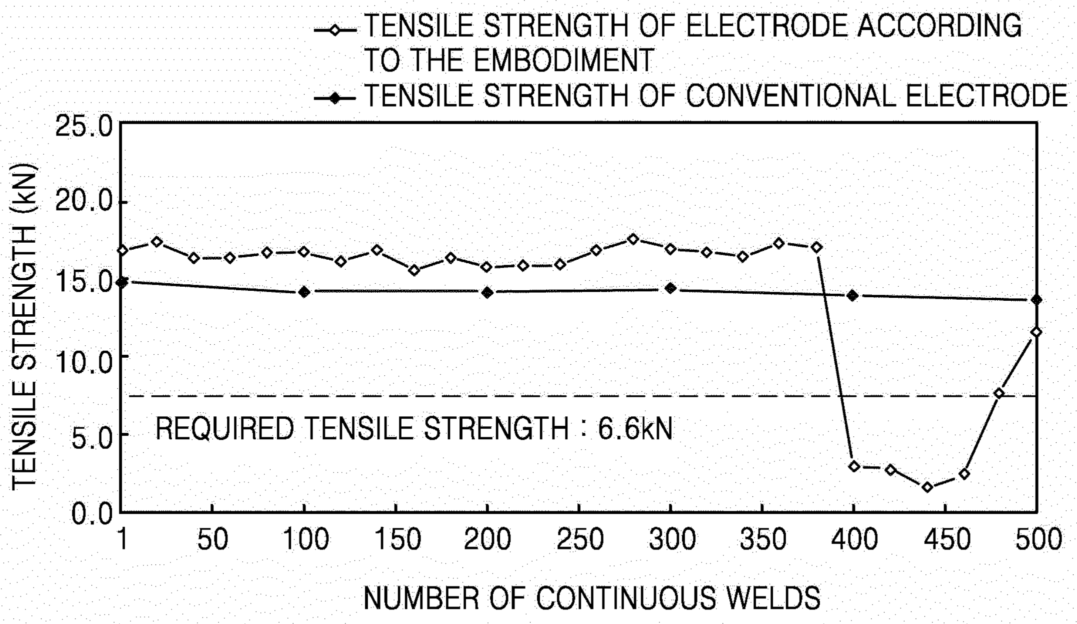


FIG. 19A

| | | | | | | |
|---|---|---|---|---|---|---|
| 300 | 12 | 3.2 | 7.0 | 8.0 | 8.2 | 8.6 |
| | 10 | 2.2 | 6.3 | 7.6 | 7.8 | 7.8 |
| | 8 | 0.9 | 5.3 | 7.3 | 7.6 | 7.3 |
| | 6 | 0.9 | 3.3 | 6.8 | 7.2 | 7.4 |
| | 4 | 0.8 | 0.8 | 1.9 | 5.8 | 7.0 |
| Force ($kg_f$) | Time (cycle) | 3 kA | 4 kA | 5 kA | 6 kA | 7 kA |

SMALLER THAN MINIMUM TENSILE STRENGTH
NOT SMALLER THAN MINIMUM TENSILE STRENGTH
OCCURRENCE OF EXPULSION

FIG. 19B

| 300 $kg_f$ | | | | | |
|---|---|---|---|---|---|
| Current [kA] | 5 | 6 | 7 | 8 | 9 |
| 10 Cycle | 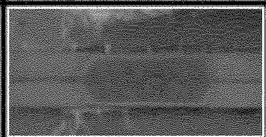 | 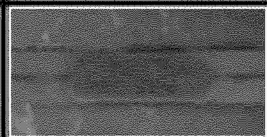 | 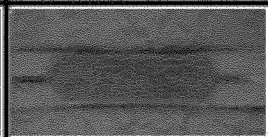 | 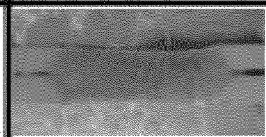 | 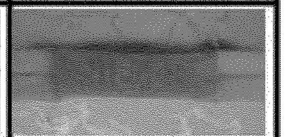 |
| Nugget [mm] | 3.0 | 4.1 | 5.7 | 5.4 | 6.0 |

FIG. 20

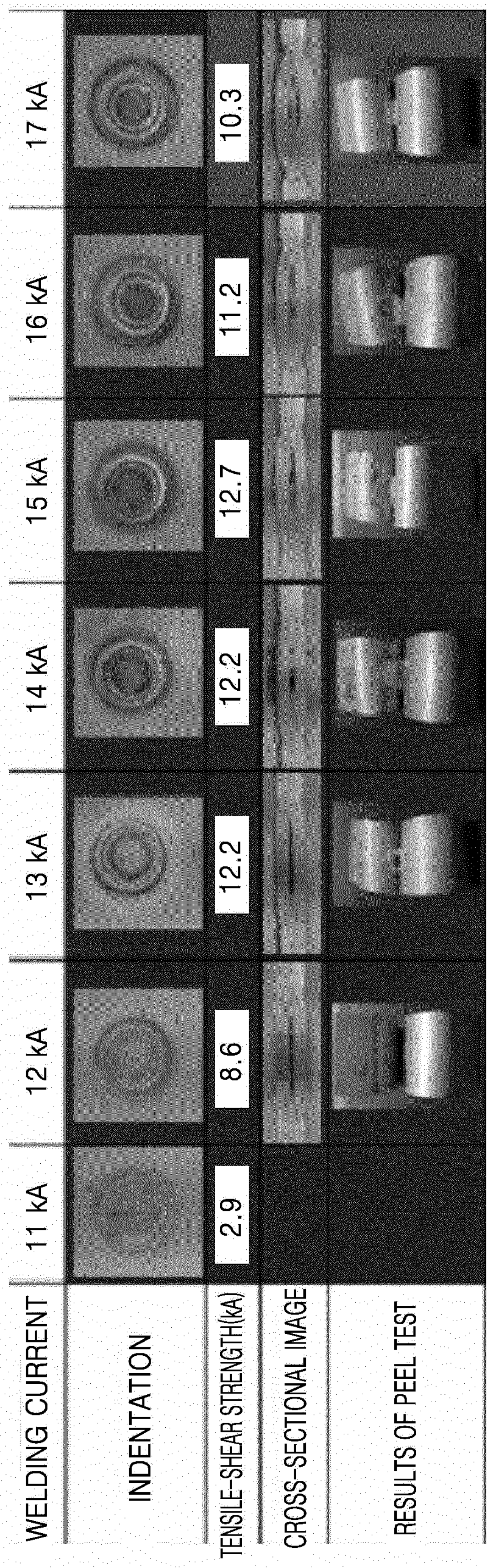
WELDING CURRENT
INDENTATION
TENSILE-SHEAR STRENGTH(kA)
CROSS-SECTIONAL IMAGE
RESULTS OF PEEL TEST
11 kA
12 kA
13 kA
14 kA
15 kA
16 kA
17 kA
2.9
8.6
12.2
12.2
12.7
11.2
10.3

FIG. 21

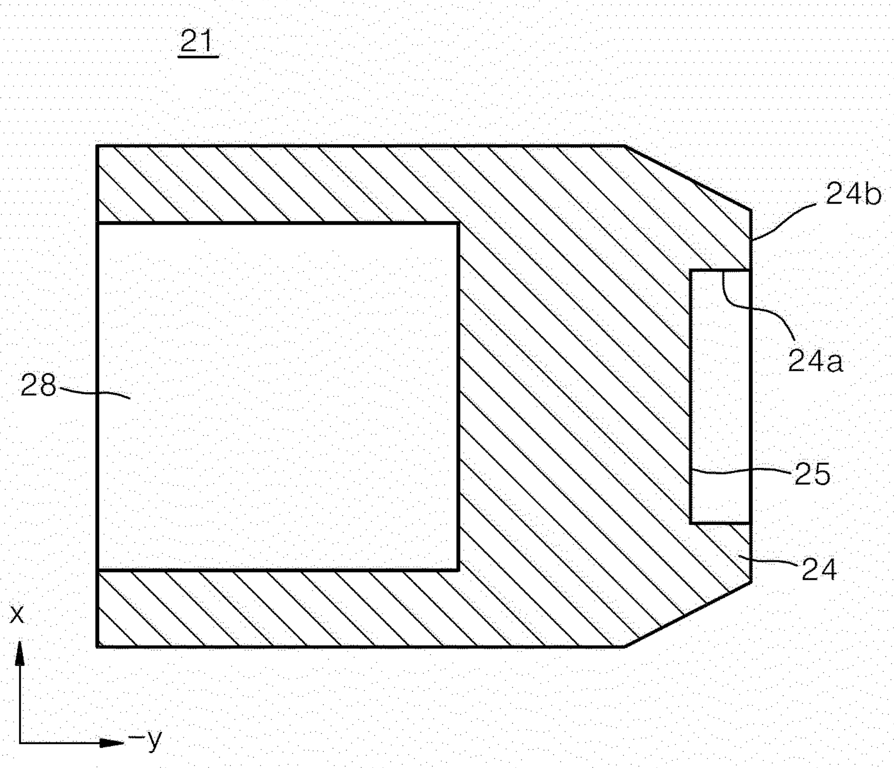

FIG. 22A

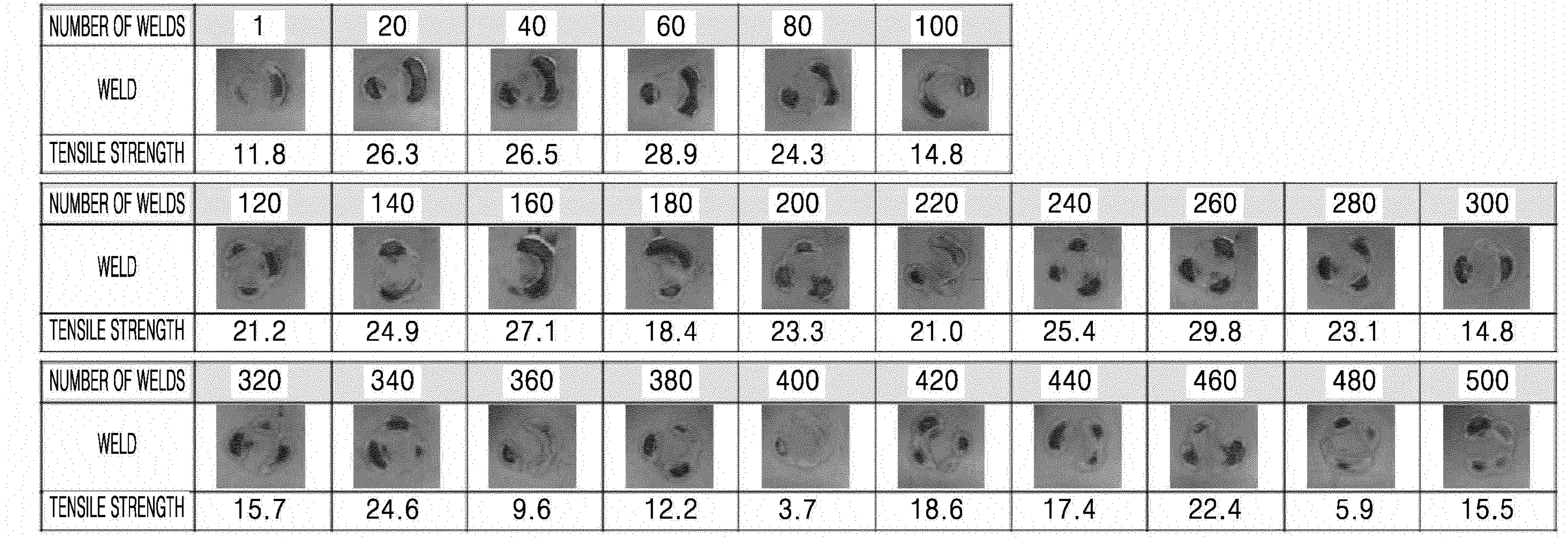

| NUMBER OF WELDS | 1 | 20 | 40 | 60 | 80 | 100 | | | | |
|---|---|---|---|---|---|---|---|---|---|---|
| TENSILE STRENGTH | 11.8 | 26.3 | 26.5 | 28.9 | 24.3 | 14.8 | | | | |
| NUMBER OF WELDS | 120 | 140 | 160 | 180 | 200 | 220 | 240 | 260 | 280 | 300 |
| TENSILE STRENGTH | 21.2 | 24.9 | 27.1 | 18.4 | 23.3 | 21.0 | 25.4 | 29.8 | 23.1 | 14.8 |
| NUMBER OF WELDS | 320 | 340 | 360 | 380 | 400 | 420 | 440 | 460 | 480 | 500 |
| TENSILE STRENGTH | 15.7 | 24.6 | 9.6 | 12.2 | 3.7 | 18.6 | 17.4 | 22.4 | 5.9 | 15.5 |

FIG. 22B

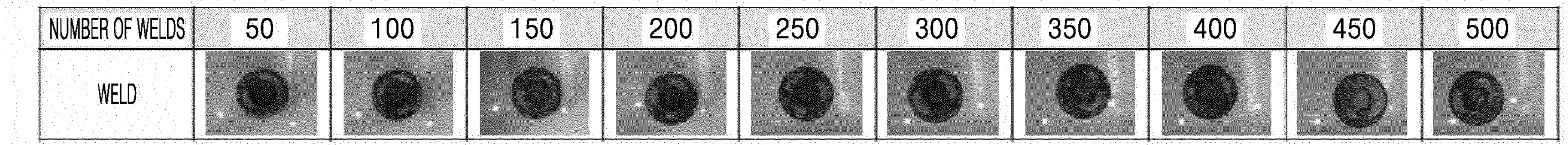

| NUMBER OF WELDS | 50 | 100 | 150 | 200 | 250 | 300 | 350 | 400 | 450 | 500 |
|---|---|---|---|---|---|---|---|---|---|---|

FIG. 22C

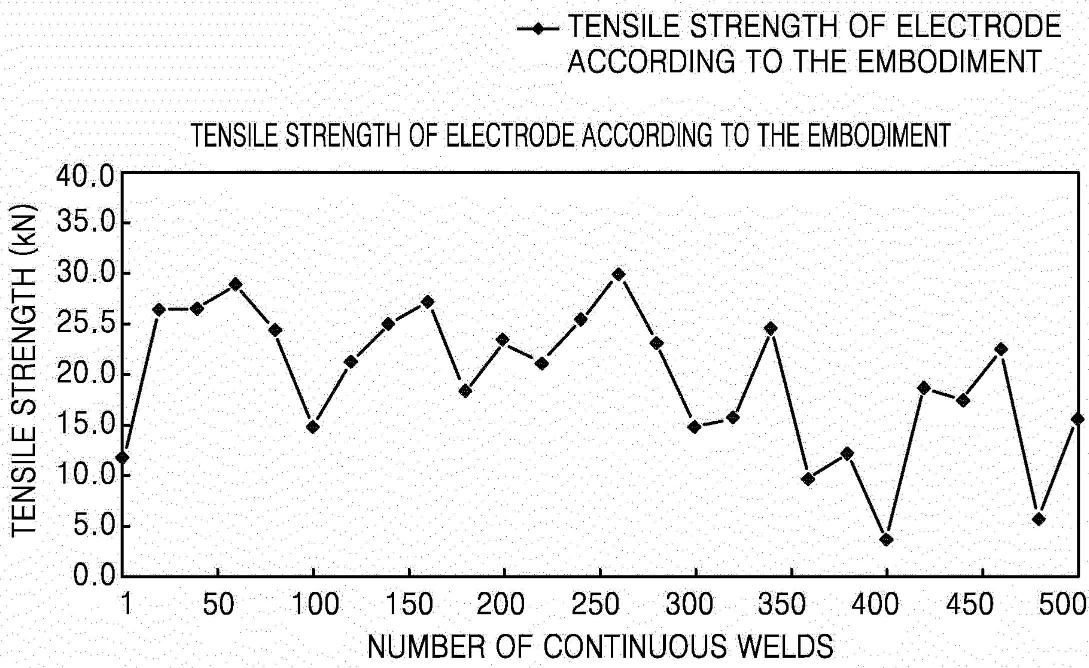
TENSILE STRENGTH OF ELECTRODE ACCORDING TO THE EMBODIMENT
TENSILE STRENGTH OF ELECTRODE ACCORDING TO THE EMBODIMENT
TENSILE STRENGTH (kN)
40.0
35.0
30.0
25.5
20.0
15.0
10.0
5.0
0.0
1
50
100
150
200
250
300
350
400
450
500
NUMBER OF CONTINUOUS WELDS

FIG. 22D

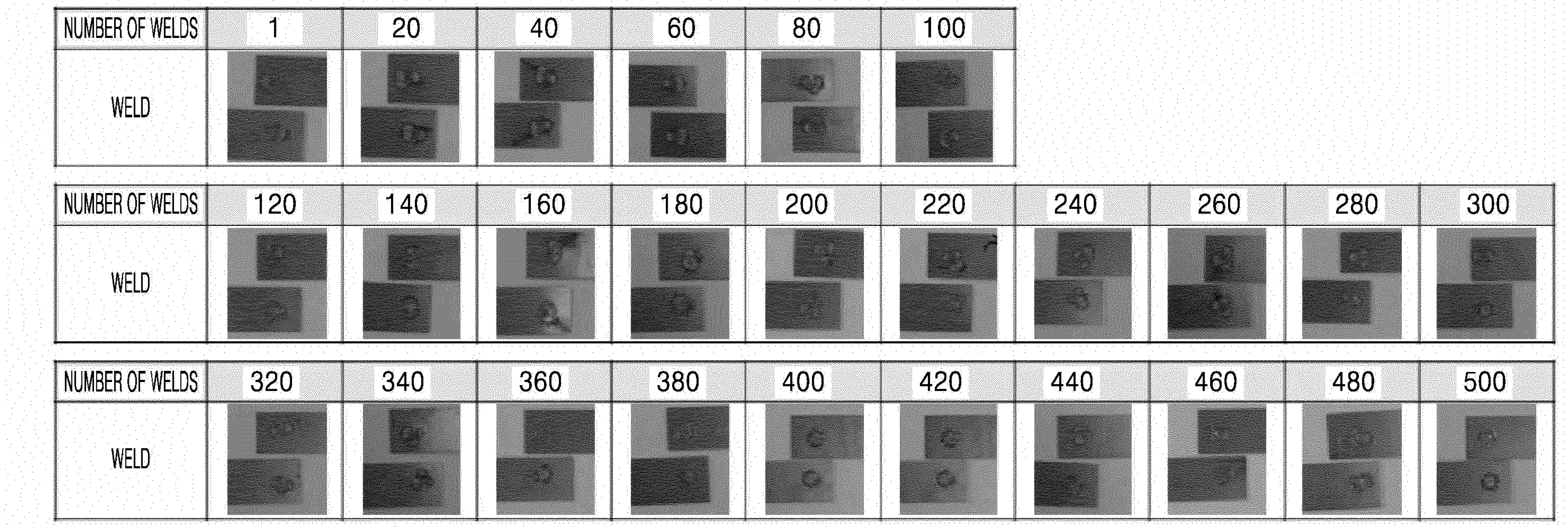
NUMBER OF WELDS
1
20
40
60
80
100
WELD
NUMBER OF WELDS
120
140
160
180
200
220
240
260
280
300
WELD
NUMBER OF WELDS
320
340
360
380
400
420
440
460
480
500
WELD

# FIG. 23

± Unit: kN
◆ BUTTON FRACTURE
SMALLER THAN REQUIRED TENSILE STRENGTH
NOT SMALLER THAN REQUIRED TENSILE STRENGTH
OCCURRENCE OF EXPULSION

| | 11 kA | 12 kA | 13 kA | 14 kA | 15 kA | 16 kA | 17 kA | 18 kA | 19 kA | 20 kA | 21 kA | 22 kA | 23 kA |
|---|---|---|---|---|---|---|---|---|---|---|---|---|---|
| No.11 | | | | | | 1.6 | 4.5 | 4.8 | 5.6 | 11.6 | 13.4 | 11.4 | |
| No.12 | | | | | | | 3.3 | 5.0 | 5.9 | | | | |
| No.13 | | | | | | | | | | 25.6 ◆ | 25.0 ◆ | | |
| No.14 | | | | | | | | | | | 25.6 ◆ | 27.4 ◆ | |
| No.15 | | | | | | | 15.0 ◆ | 26.1 ◆ | 26.3 ◆ | 26.9 ◆ | 26.6 ◆ | | |
| No.16 | | | | | | 8.5 | 18.3 ◆ | 22.1 ◆ | | | | | |
| No.17 | 3.6 | 4.5 | 5.8 | 10.8 | 20.0 | 23.5 | 24.0 ◆ | 23.0 ◆ | 26.0 ◆ | 26.8 ◆ | 26.6 ◆ | | |
| No.18 | | | | | | | 19.6 ◆ | 24.3 ◆ | 24.2 ◆ | 25.2 ◆ | 24.0 ◆ | | |
| No.19 | | | | | | | | 20.1 ◆ | 26.7 ◆ | 26.9 ◆ | 26.4 ◆ | 26.2 ◆ | |
| No.20 | | | | | | 17.7 ◆ | 24.7 ◆ | 24.7 ◆ | 25.5 ◆ | 26.6 ◆ | 24.7 ◆ | 26.0 ◆ | |
| No.21 | | | | | | | 19.8 ◆ | 24.3 ◆ | 25.2 ◆ | 26.2 ◆ | 26.4 ◆ | 25.7 ◆ | 26.3 ◆ |
| No.22 | | | | | 11.7 | 22.0 ◆ | 24.2 ◆ | 25.3 ◆ | | | | | |

FIG. 24A

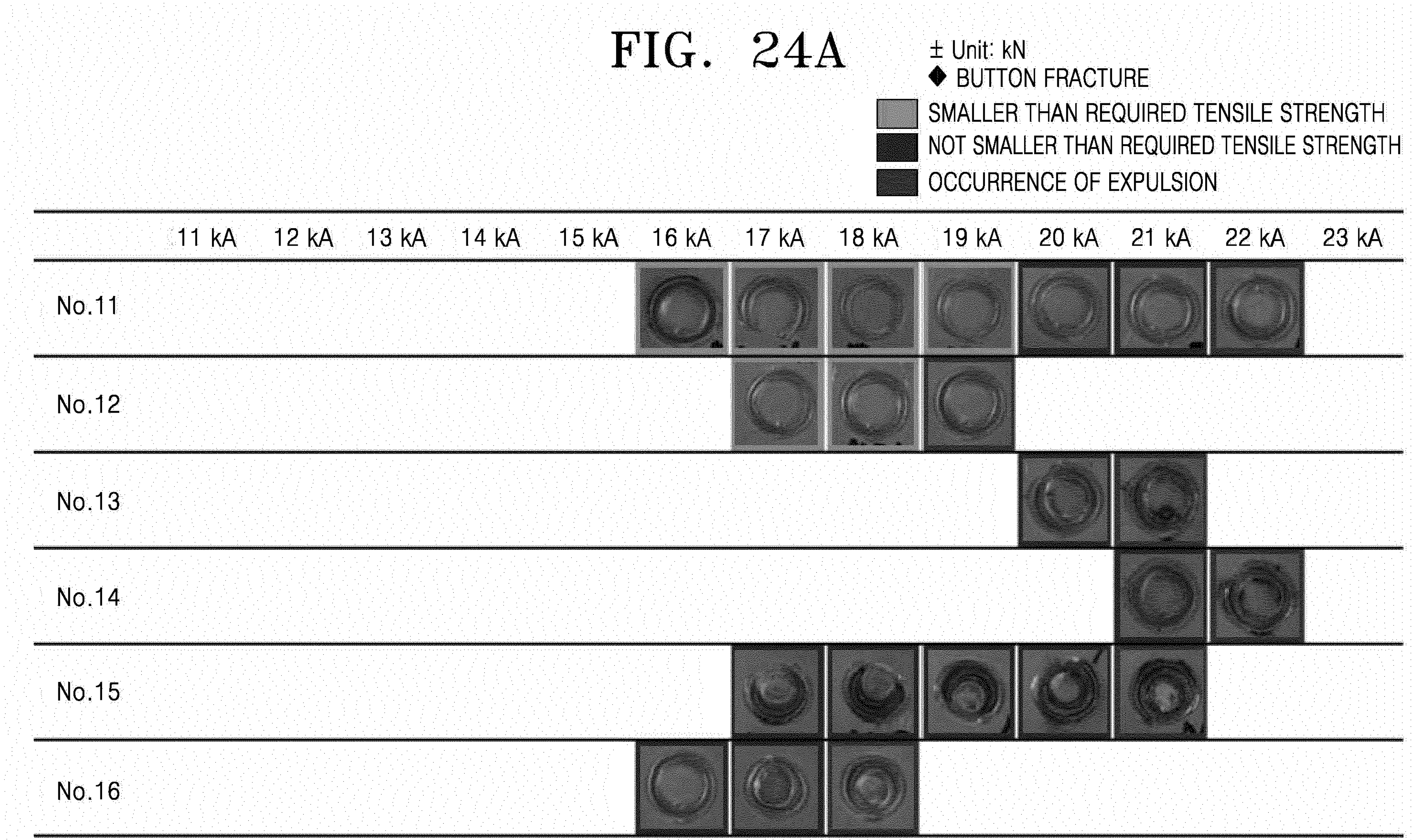
± Unit: kN
◆ BUTTON FRACTURE
SMALLER THAN REQUIRED TENSILE STRENGTH
NOT SMALLER THAN REQUIRED TENSILE STRENGTH
OCCURRENCE OF EXPULSION
11 kA
12 kA
13 kA
14 kA
15 kA
16 kA
17 kA
18 kA
19 kA
20 kA
21 kA
22 kA
23 kA
No.11
No.12
No.13
No.14
No.15
No.16

FIG. 24B

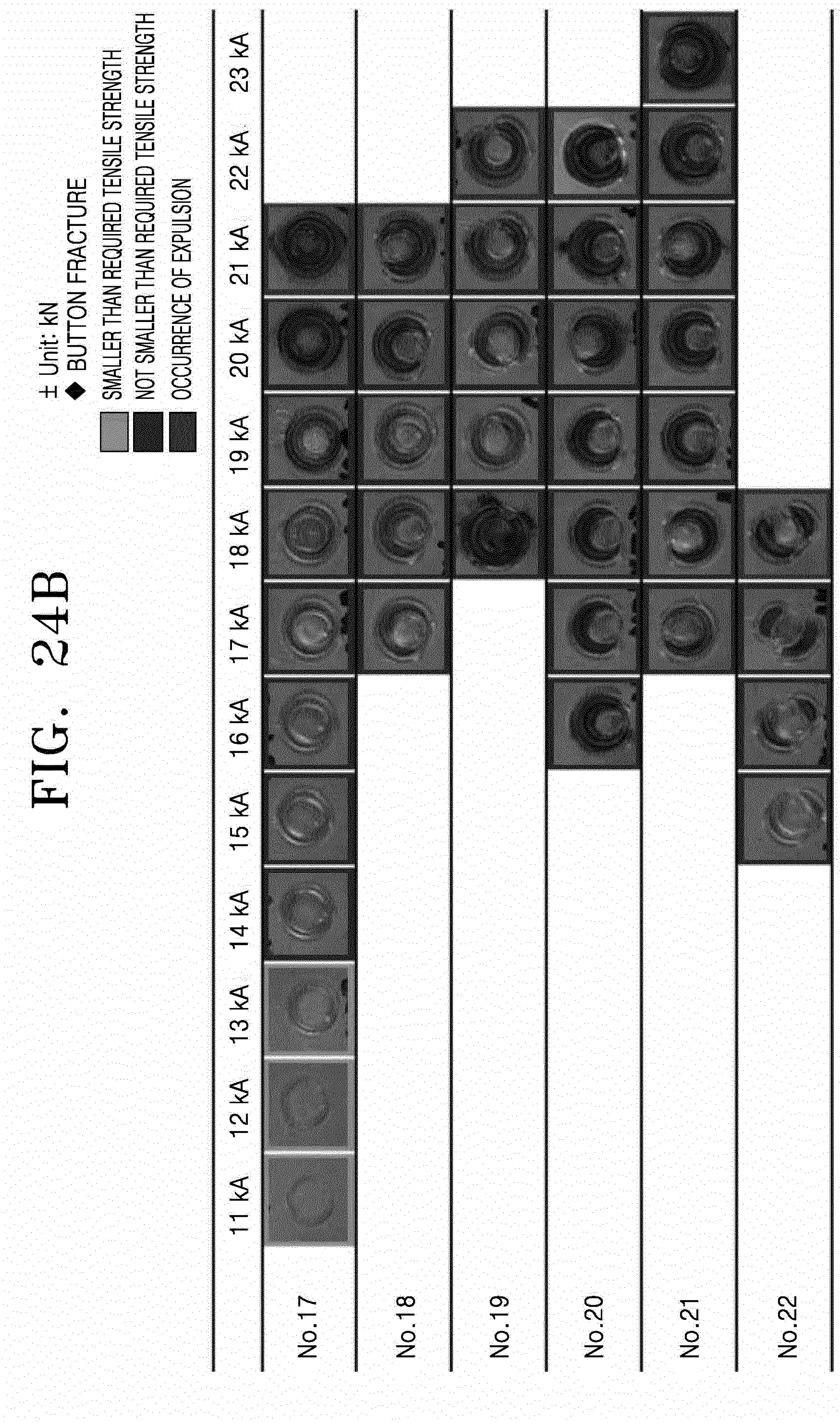
± Unit: kN
◆ BUTTON FRACTURE
SMALLER THAN REQUIRED TENSILE STRENGTH
NOT SMALLER THAN REQUIRED TENSILE STRENGTH
OCCURRENCE OF EXPULSION
11 kA
12 kA
13 kA
14 kA
15 kA
16 kA
17 kA
18 kA
19 kA
20 kA
21 kA
22 kA
23 kA
No.17
No.18
No.19
No.20
No.21
No.22

FIG. 25A

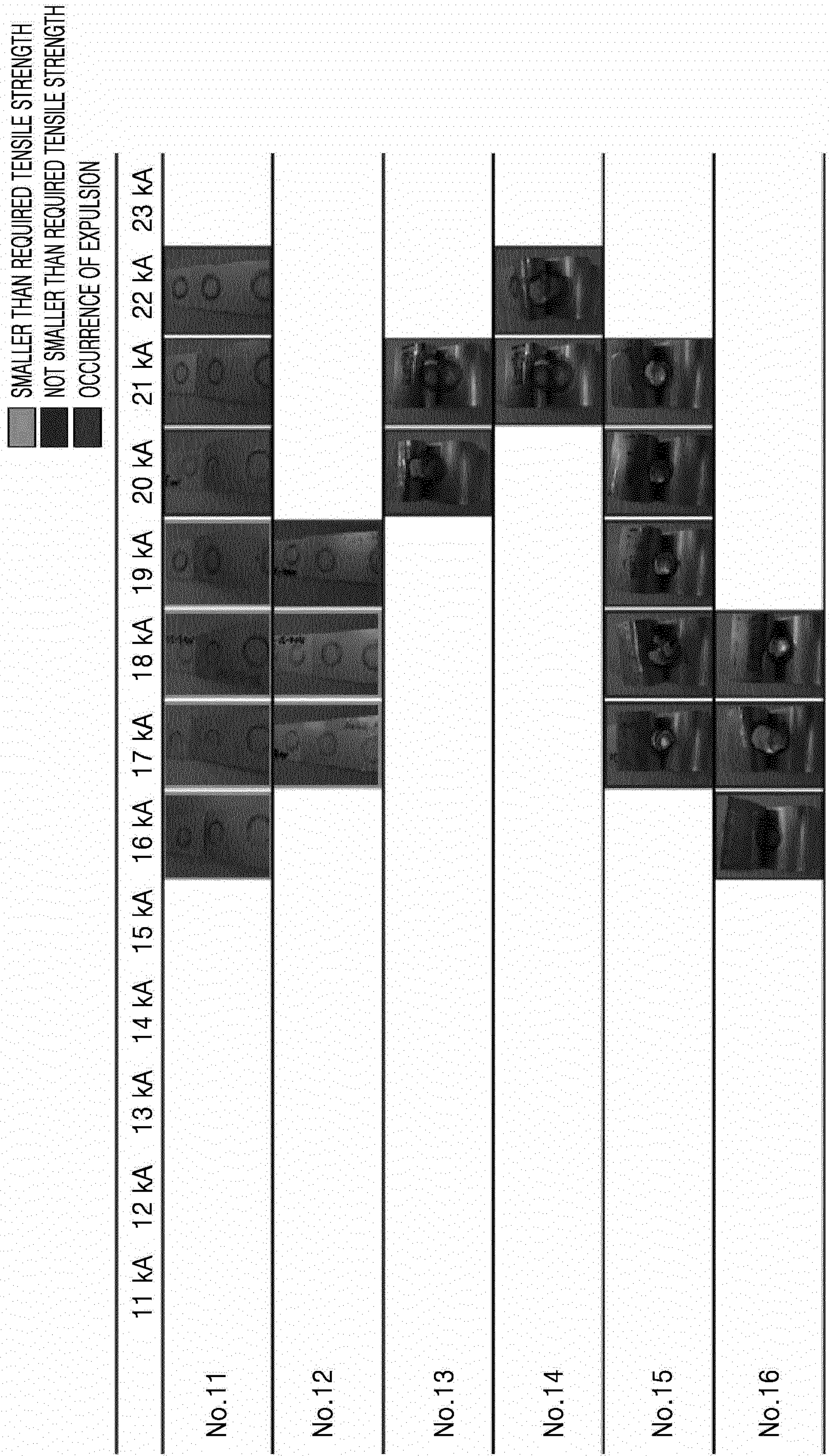
SMALLER THAN REQUIRED TENSILE STRENGTH
NOT SMALLER THAN REQUIRED TENSILE STRENGTH
OCCURRENCE OF EXPULSION
11 kA
12 kA
13 kA
14 kA
15 kA
16 kA
17 kA
18 kA
19 kA
20 kA
21 kA
22 kA
23 kA
No.11
No.12
No.13
No.14
No.15
No.16

FIG. 25B

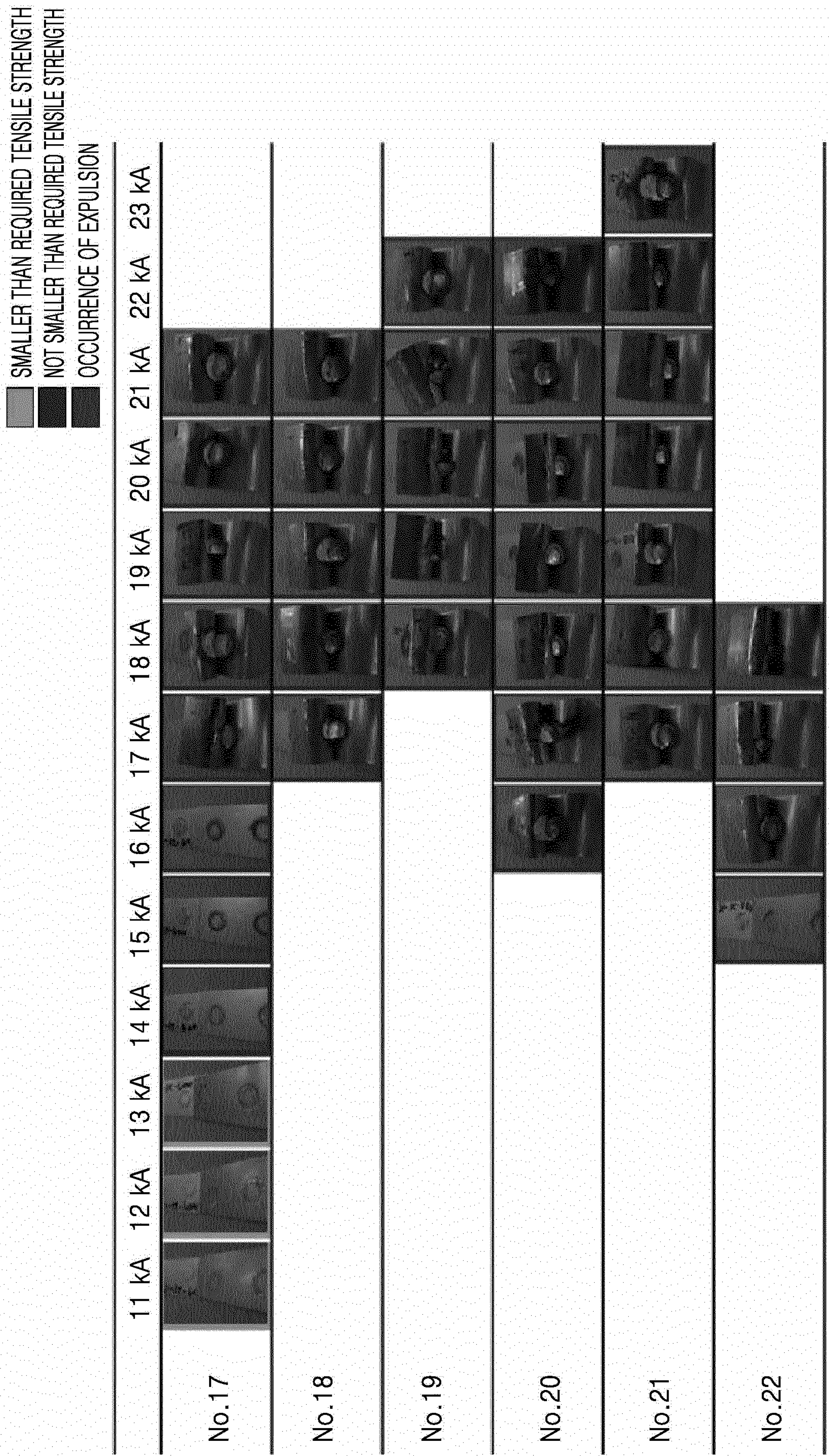
SMALLER THAN REQUIRED TENSILE STRENGTH
NOT SMALLER THAN REQUIRED TENSILE STRENGTH
OCCURRENCE OF EXPULSION
11 kA
12 kA
13 kA
14 kA
15 kA
16 kA
17 kA
18 kA
19 kA
20 kA
21 kA
22 kA
23 kA
No.17
No.18
No.19
No.20
No.21
No.22

# FIG. 26

SMALLER THAN REQUIRED TENSILE STRENGTH
NOT SMALLER THAN REQUIRED TENSILE STRENGTH
OCCURRENCE OF EXPULSION

| | 16 kA | 17 kA | 18 kA | 19 kA | 20 kA | 21 kA | 22 kA | 23 kA | 24 kA | 25 kA |
|---|---|---|---|---|---|---|---|---|---|---|
| No.23 | | 1.4 | 1.9 | 2.4 | 2.3 | 2.4 | 3.1 | 4.6 | 5.3 | |
| | | 0 | 2.2 | 2.2 | 2.4 | 2.7 | 3.1 | 4.5 | | |
| No.24 | | 0 | 0 | 14.1 | 14.2 | 14.6 | 14.6 | | | |
| | | 0 | 0 | 2.9 | 6.9 | 8.9 | 11.4 | | | |
| No.25 | | 0 | 0 | 0 | 0 | 0 | 0 | 0 | 0 | 3.3 |
| | | 0 | 0 | 0 | 0 | 0 | 0 | 0 | 0 | |
| No.26 | | | | | | | 14.1 | 20.0 | 24.6 | |
| | | | | | | | | | 6.2 | 26.7 |

FIG. 27A

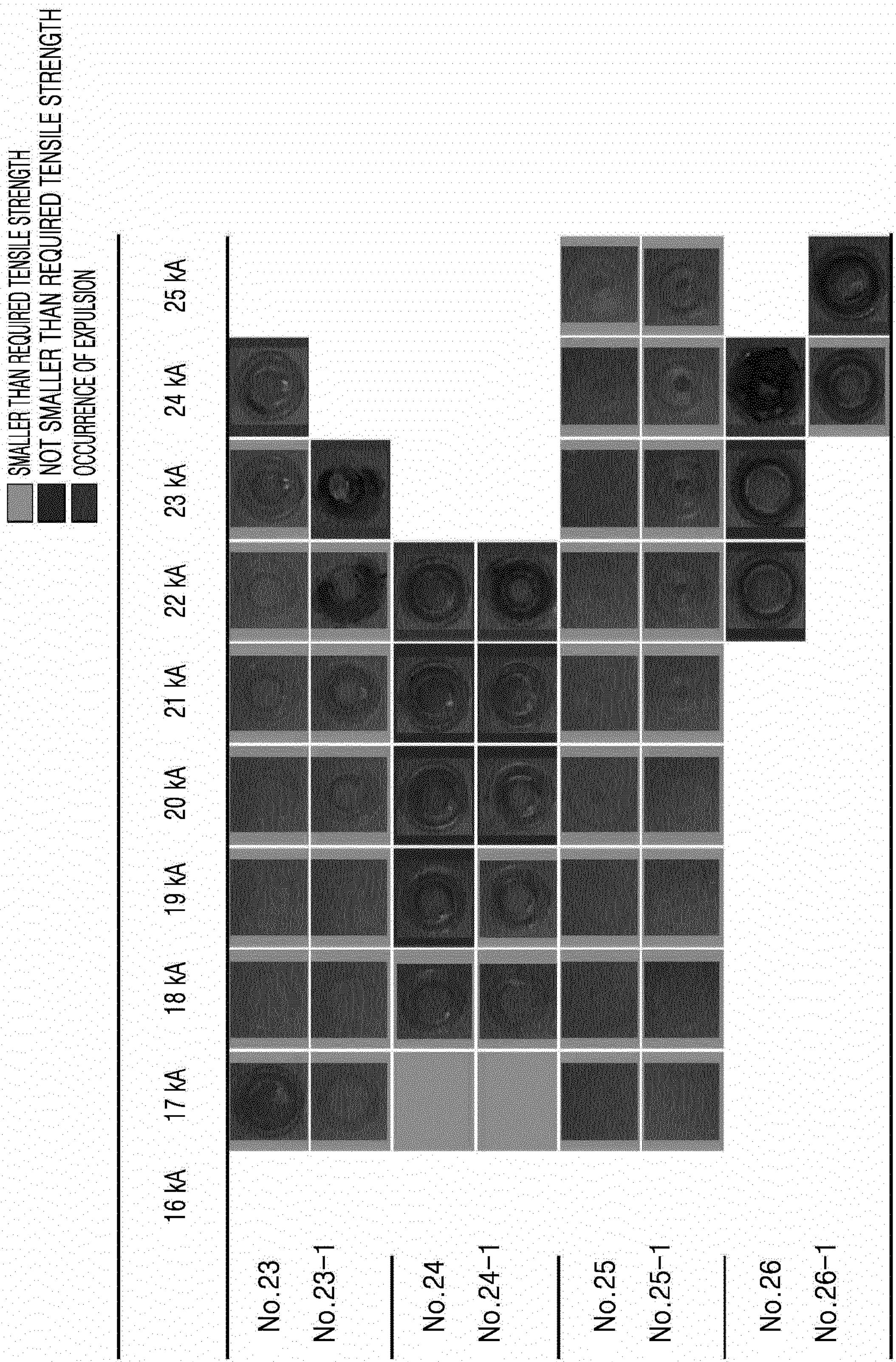
SMALLER THAN REQUIRED TENSILE STRENGTH
NOT SMALLER THAN REQUIRED TENSILE STRENGTH
OCCURRENCE OF EXPULSION
16 kA
17 kA
18 kA
19 kA
20 kA
21 kA
22 kA
23 kA
24 kA
25 kA
No.23
No.23-1
No.24
No.24-1
No.25
No.25-1
No.26
No.26-1

FIG. 27B

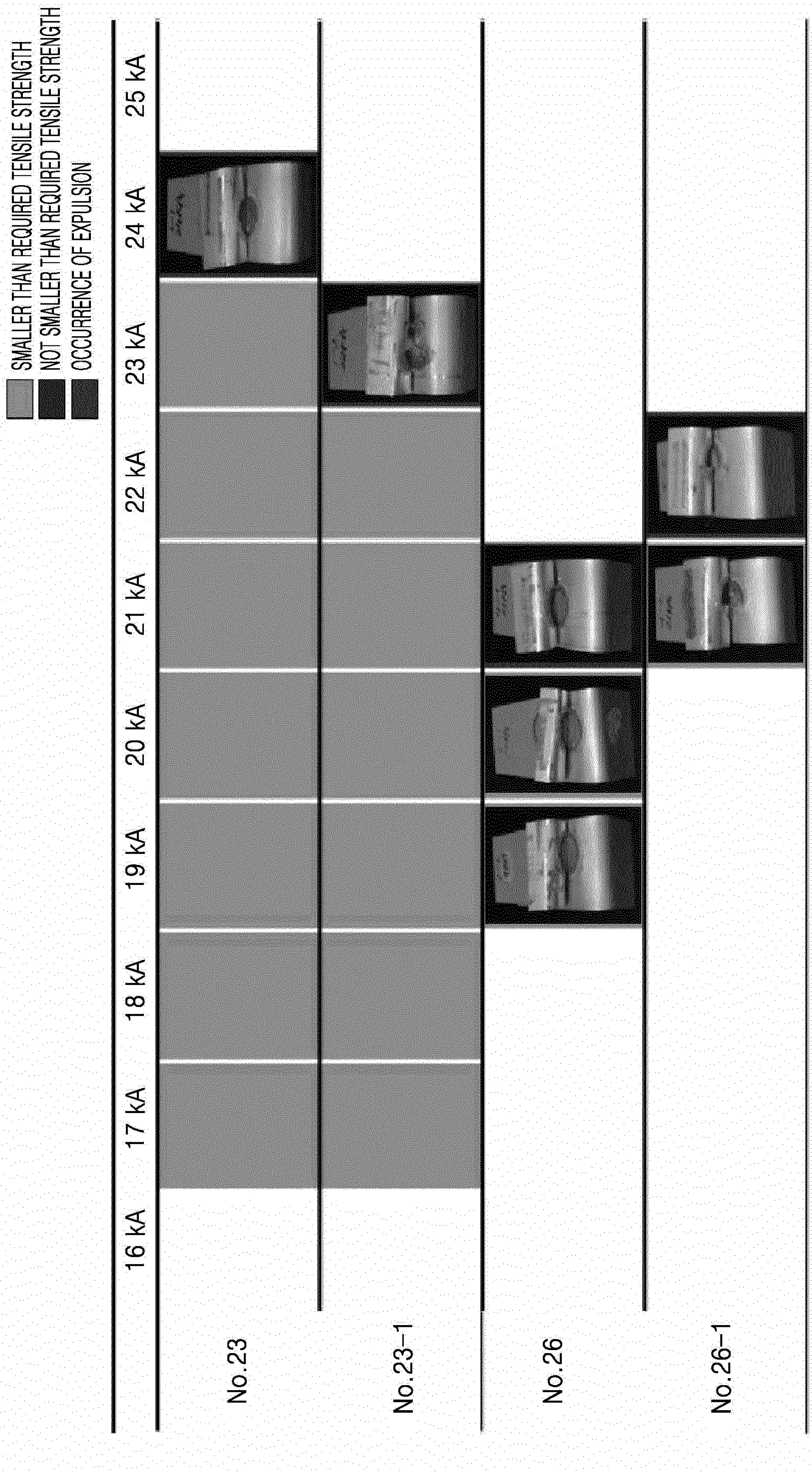
SMALLER THAN REQUIRED TENSILE STRENGTH
NOT SMALLER THAN REQUIRED TENSILE STRENGTH
OCCURRENCE OF EXPULSION
16 kA
17 kA
18 kA
19 kA
20 kA
21 kA
22 kA
23 kA
24 kA
25 kA
No.23
No.23−1
No.26
No.26−1

## INTERNATIONAL SEARCH REPORT

International application No.
**PCT/KR2013/004548**

A. CLASSIFICATION OF SUBJECT MATTER

***B23K 11/11(2006.01)i, B23K 11/30(2006.01)i***

According to International Patent Classification (IPC) or to both national classification and IPC

B. FIELDS SEARCHED

Minimum documentation searched (classification system followed by classification symbols)
B23K 11/11; B23K 35/04; B23K 11/24; B23K 11/30; B23K 9/24

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: resistor, welding, electrode, projection, nugget

C. DOCUMENTS CONSIDERED TO BE RELEVANT

| Category* | Citation of document, with indication, where appropriate, of the relevant passages | Relevant to claim No. |
|---|---|---|
| Y | JP 2005-125397 A (HONDA MOTOR CO LTD) 19 May 2005<br>See paragraph 0016, claim 1 and figures 1, 2 | 1-16 |
| Y | JP 2007-130659 A (DAIHATSU MOTOR CO LTD et al.) 31 May 2007<br>See claims 1 to 6 and figures 1 to 13 | 1-16 |
| A | JP 2010-131666 A (KANTO AUTO WORKS LTD) 17 June 2010<br>See claims 1 to 4 and figures 1, 4 | 1-18 |
| A | KR 10-1990-0701463 A (CMW INC.) 20 December 1990<br>See claims 1-10 and figures 1-A to 1-D | 1-18 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 AUGUST 2013 (28.08.2013) | **28 AUGUST 2013 (28.08.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

**INTERNATIONAL SEARCH REPORT**
Information on patent family members

International application No.
**PCT/KR2013/004548**

| Patent document cited in search report | Publication date | Patent family member | Publication date |
|---|---|---|---|
| JP 2005-125397 A | 19/05/2005 | NONE | |
| JP 2007-130659 A | 31/05/2007 | NONE | |
| JP 2010-131666 A | 17/06/2010 | NONE | |
| KR 10-1990-0701463 A | 20/12/1990 | EP 0561773 A1 | 29/09/1993 |
| | | EP 0561773 A4 | 10/01/1994 |
| | | JP 08-018144B2 | 28/02/1996 |
| | | US 04954687 A | 04/09/1990 |
| | | US 05015816 A | 14/05/1991 |
| | | US 05126528 A | 30/06/1992 |
| | | WO 90-04489 A1 | 03/05/1990 |

Form PCT/ISA/210 (patent family annex) (July 2009)